# EUROPEAN PATENT APPLICATION

(11) **EP 2 056 205 A1**
(43) Date of publication of application: **06.05.2009**
(21) Application number: 07767916.5
(22) Date of filing: 29.06.2007
(51) Int. Cl.: G06F 13/00, H04N 7/173

(54) **CONTENT PLAYBACK DEVICE, CONTENT PLAYBACK METHOD, CONTENT PLAYBACK SYSTEM, CONTENT PROVIDING DEVICE, CONTENT DATA STRUCTURE, CONTENT PLAYBACK PROGRAM, AND RECORDING MEDIUM**

(30) Priority: 10.08.2006 JP 2006218972; 27.04.2007 JP 2007120206
(71) Applicant: Sharp Kabushiki Kaisha, Osaka-shi, Osaka 545-8522 (JP)
(72) Inventor: HASHIURA, Masaki, Chiba-shi, Chiba 261-0013 (JP); OTOKAWA, Hideyuki, Yoshino-gun, Nara 638-0831 (JP); HIRATA, Masafumi, Tokyo, 133-0052 (JP); NITTA, Soichi, Chiba 275-0016 (JP); KASHITO, Kiyotaka, Kobe-shi, Hyogo 658-0081 (JP); SUDO, Tatsuo, Chiba 261-0013 (JP); KINOSHITA, Takuya, Chiba 261-0001 (JP); TAKAHASHI, Masafumi, Chiba 285-0811 (JP); DOI, Katsuo, Nara 633-0062 (JP); UMEMOTO, Azusa, Kizugawa-shi, Kyoto 619-0202 (JP); ENATSU, Aya, Chiba-shi, Chiba 262-0033 (JP); YOSHIKAWA, Satoshi, Chiba 275-0013 (JP)
(74) Representative: Müller - Hoffmann & Partner
(86) International application number: PCT/JP2007/063130
(87) International publication number: WO 2008/018255

(57) **Abstract**

The content reproducing apparatus comprises a control section (110) which includes: a content reproduction section (113) for reproducing a content; and a content management section (112) for acquiring an acquisition target content in accordance with acquisition instruction information included in the content reproduced by the content reproduction section (113), wherein the content which is highly likely to be subsequently reproduced is acquired in accordance with the acquisition instruction information and is stored into a storage section (130). Thus, it is possible to realize a content reproducing apparatus which allows a content, whish is highly likely to be subsequently reproduced, to be efficiently stored therein in advance.

## Description

### Technical Field

The present invention relates to (i) a content reproducing apparatus for reproducing a content, (ii) a content reproducing method, and (iii) a content reproducing system. Further, the present invention relates to a content providing apparatus for providing a content to the content reproducing apparatus.

### Background Art

Content reproducing apparatuses for reproducing contents such as still images and moving images are widely used. Particularly in recent years, with wider use of the Internet and Web services using the same, there are used network type content reproducing apparatuses each of which acquires a content from the outside via a network and reproduces the acquired content. An example thereof is a content reproducing apparatus which acquires several contents including photographs from an external server and sequentially reproduces the acquired contents so as to display the photographs as a slide show.

Incidentally, such a network type content reproducing apparatus requires a certain time in acquiring the contents. Thus, in case of starting acquisition of a content at a time when reproduction of the content should be started, e.g., at a time when a user gives an instruction to reproduce the content, it is impossible to immediately start the reproduction of the content at this time. Therefore, there is adopted a cache technique in which a content to be reproduced later is acquired in advance and the content is stored in the apparatus.

Examples of the cache technique include: a technique in which a content to be linked is acquired in response to movement of a mouse on a browser (see Patent Literature 1); a technique in which contents are acquired in an order specified by the user and the acquired contents are cached (see Patent Literature 2); and the like. Further, as a technique for efficiently managing data acquired from the server, also a technique in which a fixed flag is set in frequently used data and the data having the fixed flag is not deleted from the cache (see Patent Literature 3).

### Citation List

Patent Literature 1
   Japanese Patent Application Publication, Tokukai, No. 2005-85174 A (Publication Date: March 31, 2005)
Patent Literature 2
   Japanese Patent Application Publication, Tokukai, No. 2000-305836 A (Publication Date: November 2, 2000)
Patent Literature 3
   Japanese Patent Application Publication, Tokukai, No. 2002-251373 A (Publication Date: September 6, 2002)

### Summary of Invention

In a content reproducing apparatus whose storage capacity for storing contents in advance is not sufficient, it is important to more efficiently utilize a cache by caching only the necessary contents during a necessary period.

However, according to the foregoing techniques, contents to be stored in advance are determined in accordance with the user's operation. Thus, if the user operates the apparatus in accordance with his/her erroneous determination, an unnecessary content is stored, so that the cache is less efficiently used. Further, in order to specify a content to be stored, it is necessary for the user to determine which content should be specified and to operate accordingly.

Further, in case where contents in the cache are managed by the side of the content reproducing apparatus in accordance with the user's operation, it is necessary for the user to grasp in advance a content which may be reproduced later. Further, in case of managing the cache of the content reproducing apparatus in accordance with instructions from the server, it is necessary for the server to respectively grasp conditions under which contents are used in the content reproducing apparatus, so that it is necessary to carry out vast amounts of processes in the server which provides contents to a plurality of content reproducing apparatuses. If caches for all the content reproducing apparatuses are uniformly managed in order to reduce the number of necessary processes, the caches of the content reproducing apparatuses are less efficiently used.

The present invention was made in view of the foregoing problems, and an object of the present invention is to realize a content reproducing apparatus which allows efficient cache of contents even in case where it is impossible to provide a sufficient storage capacity for caching contents.

In order to solve the problems, a content reproducing apparatus according to the present invention includes: content reproduction means for reproducing a content; and content acquisition means for acquiring a specific acquisition target content in accordance with acquisition instruction information which is indicative of an instruction to acquire the specific acquisition target content and is included in the content reproduced by the content reproduction means.

Further, in order to solve the foregoing problems, a content reproducing method according to the present invention causes a content reproducing apparatus to reproduce a content, said method comprising the step of acquiring a specific acquisition target content in accordance with acquisition instruction information which is indicative of an instruction to acquire the specific acquisition target content and is included in the content.

The content reproducing apparatus can acquire the acquisition target content in accordance with the acquisition instruction information and can store the acquired acquisition target content into a content storage section of the content reproducing apparatus itself. Thus, if the acquisition instruction information is indicative of an instruction to acquire as the acquisition target content another content which is highly likely to be reproduced later, the content reproducing apparatus can in advance store into the content storage section the aforementioned another content which is highly likely to be reproduced later.

Furthermore, the acquisition target content is specified by the acquisition instruction information and is determined without any operation carried out by the user. Thus, it is possible to in advance store into the content storage section a content which is highly likely to be reproduced later without forcing the user to determine which content should be stored and to accordingly operate. Further, an unnecessary content is not acquired on the basis of the user's erroneous determination, so that the unnecessary content is less likely to be stored in the content reproducing apparatus itself, thereby more efficiently utilizing a capacity for storing the acquired content therein.

Further, the acquisition instruction information is included particularly in a reproduction target content reproduced by the content reproducing apparatus. Thus, a content provider or a content providing apparatus which provides the reproduction target content to the content reproducing apparatus changes the acquisition instruction information included in the reproduction target content, thereby freely setting the acquisition target content which is to be acquired by the content reproducing apparatus. That is, the content provider or the content providing apparatus can easily change the acquisition target content the content reproducing apparatus stores into the content storage section without changing an algorithm for causing the content reproducing apparatus to operate.

Note that, the content acquisition means may acquire the acquisition target content from an external device positioned outside the content reproducing apparatus or may acquire the acquisition target content from an internal device provided in the content reproducing apparatus. The external device may be arranged in any manner as long as the external device can provide a content to the content reproducing apparatus, and examples thereof include: a communication device arranged so as to be capable of communicating with the content reproducing apparatus via a communication network; a storage device which reads out the content stored in the storage device itself and supplies the content to the content reproducing apparatus; and a storage medium reproducing device which reads out a content stored in a storage medium and supplies the content to the content reproducing apparatus. Further, the internal device may be arranged in any manner as long as the internal device can supply a content to the content reproducing apparatus, and examples thereof include: a storage device such as a flash memory; and a storage medium reproducing device such as an optical disk drive.

It is preferable to arrange the content reproducing apparatus according to the present invention so that: the acquisition instruction information is indicative of an instruction to acquire two or more acquisition target contents in a specific order, and the content acquisition means acquires said two or more acquisition target contents in the order specified by the acquisition instruction information.

According to the arrangement, also in case where two or more contents are highly likely to be reproduced later, the content reproducing apparatus can in advance store into the content storage section of the content reproducing apparatus the two or more content which are highly likely to be reproduced later by making the acquisition instruction information indicative of an instruction to acquire the two or more contents.

Moreover, the content acquisition means acquires the acquisition target contents in an order specified by the acquisition instruction information. Thus, the acquisition instruction information is made indicative of an instruction to sequentially acquire the two or more contents so that a content which is more highly likely to be reproduced later is more preferentially acquired, so that the content reproducing apparatus can sequentially store into the content storage section so that a content which is more highly likely to be reproduced later is more preferentially stored. Thus, it is possible to exhibit such further effect that the content reproducing apparatus can more efficiently store into the content storage section a plurality of contents whose reproduction order is determined.

It is preferable to arrange the content reproducing apparatus according to the present invention so that: the acquisition instruction information includes execution mode specifying information indicative of an execution mode of an acquisition process for acquiring each acquisition target content, and the content reproduction means executes a reproduction process for carrying out content reproduction in parallel to the acquisition process executed by the content acquisition means when a first mode is specified by the execution mode specifying information and executes the reproduction process after the content acquisition means finishes the acquisition process when a second mode is specified by the execution mode specifying information.

According to the arrangement, the content reproducing apparatus can execute the reproduction process for carrying out content reproduction in parallel to the acquisition process for acquiring the acquisition target content. That is, it is possible to execute the reproduction process for carrying out content reproduction at the same time as the acquisition process without waiting for completion of the acquisition process. Thus, the content reproducing apparatus can sequentially execute the reproduction process for carrying out content reproduction before and after the acquisition process without any blank in the acquisition process. This is effective in case where the reproduction target content targeted in the reproduction process is not the acquisition target content.

Further, the content reproducing apparatus can start the reproduction process for carrying out content reproduction after completing the acquisition process for acquiring the acquisition target content. That is, the content reproducing apparatus can delay start of the reproduction process until acquisition of the acquisition target content is completed. This is effective in case where the reproduction target content targeted in the reproduction process is the acquisition target content.

Further, according to the arrangement, a mode in which the acquisition process is to be executed is determined in accordance with execution mode specifying information included in the reproduced content. Thus, the content provider or the content providing apparatus which provides the reproduction target content to the content reproducing apparatus changes the execution mode specifying information included in the reproduction target content so as to freely set the execution mode in which the content reproducing apparatus executes the acquisition process. That is, the content provider or the content providing apparatus can specify whether or not to execute the acquisition process and the reproduction process in parallel, to the content reproducing apparatus, without changing an algorithm for operating the content reproducing apparatus.

Note that, in case where the content acquisition instruction information is indicative of an instruction to acquire two or more acquisition target contents, the execution mode specifying information may specify an execution mode for each acquisition target content or may collectively specify an execution mode for all acquisition target contents. In case where the content acquisition instruction information specifies a single execution mode for plural acquisition target contents, the content acquisition means may acquire the acquisition target contents in parallel or may acquire the acquisition target contents in an arbitrary order.

It is preferable to arrange the content reproducing apparatus according to the present invention so as to further include display control means for causing a display section to display a predetermined message when the reproduction process executed by the content reproduction means is delayed until the content acquisition means finishes the acquisition process.

According to the arrangement, in case where execution of the reproduction process for carrying out content reproduction is delayed due to the acquisition process for acquiring the acquisition target content, it is possible to show the user a predetermined message, such as a character string "Content is being acquired", indicating that the acquisition process for acquiring the acquisition target content is being executed. As a result, it is possible to notify the user of a reason for which reproduction of the content is delayed, thereby providing sense of security to the user.

It is preferable to arrange the content reproducing apparatus according to the present invention so that: the acquisition instruction information includes deletion condition specifying information indicative of a condition under which each acquisition target content is deleted, and the content acquisition means stores the acquisition target content into a content storage section so that the acquisition target content corresponds to the deletion condition specifying information.

The content reproducing apparatus acquires the acquisition target content in accordance with the acquisition instruction information and stores the acquired content into the content storage section so that the acquired content corresponds to the deletion condition specifying information included in the acquisition instruction information. Thus, the content reproducing apparatus can delete the acquisition target content, stored in the content storage section, in accordance with the deletion condition specifying information corresponding to the acquisition target content. Thus, by causing the acquisition instruction information to include the deletion condition specifying information for specifying a deletion condition based on a possibility that the acquisition target content will be reproduced later, it is possible to exhibit such further effect that the acquisition target content stored in the content storage section is deleted at a predetermined timing thereby efficiently utilizing the content storage section.

Further, the deletion condition specifying information is included particularly in the reproduction target condition reproduced by the content reproducing apparatus. Thus, the content provider or the content providing apparatus which provides the reproduction target content to the content reproducing apparatus change the deletion condition specifying information included in the reproduction target content, thereby freely set the condition under which the content reproducing apparatus deletes the acquisition target condition stored in the content storage section. That is, the content provider or the content providing apparatus can easily change the condition, under which the content reproducing apparatus deletes the acquisition target condition stored in the content storage section, without changing an algorithm for operating the content reproducing apparatus.

Note that, as the deletion condition, it is possible to set: a mode specifying such condition that the content is necessarily deleted in a first deletion process after storage of the content (temporary mode); a mode which allows deletion of the content for a predetermined period (static mode); a mode which allows deletion of the content when the number of times reproduced becomes a predetermined number of times (counter mode); or a mode which allows deletion of the content when a time passage from a reference time becomes a specific time (timer mode), for example. Further, as a deletion condition given to a content to which the aforementioned deletion condition is not applicable, it is possible to set a deletion condition which allows deletion of the content in case where a time passage from the reference time is longer than those of all the other contents. In this case, the reference time may be a storage time in which the content is stored in the content storage section, or may be a read-out time in which the content is read out from the content storage section, or may be earlier one of the storage time and the read-out time.

Note that, it is preferable to arrange the content reproducing apparatus so as to include content deletion means for referring to the deletion condition specifying information corresponding to the acquisition target content stored in the content storage means at a predetermined time so as to delete the acquisition target content in accordance with a specified deletion condition.

It is preferable to arrange the content reproducing apparatus according to the present invention so as to further include data format conversion means for converting the acquisition target content acquired by the content acquisition means into a data format, which is reproducible by the content reproduction means, before storing the acquisition target content into the content storage section.

The content reproducing apparatus can acquire the acquisition target content in accordance with the acquisition instruction information, immediately convert the acquisition target content that has been acquired into a reproducible data format, and store the converted content into the content storage section. Thus, it is possible to exhibit such further effect that the content reproducing apparatus can immediately start reproduction of the acquisition target content at the time when the reproduction of the acquisition target content should be started.

Note that, in case where the acquisition target content acquired by the content acquisition means includes compressed or encoded media data, the data format conversion means carries out, for example, a process in which the compressed or encoded media data is developed or decoded. Further, in case where the acquisition target content includes a structured document such as an XML document, also lexical analysis and syntax analysis of the structured document are an example of the process carried out by the data conversion means.

It is preferable to arrange the content reproducing apparatus according to the present invention so that the content acquisition means temporarily stops acquisition of the acquisition target content for a predetermined period while the content reproduction means is reproducing the content.

According to the arrangement, it is possible to prevent a load exerted in acquiring the acquisition target content from inhibiting the process in which the content reproduction means carries out content reproduction.

Note that, it is preferable that the predetermined period is, for example, a period in which the content reproduction means is reproducing media data, such as moving image data and sound data, which requires reproduction carried out in a time base manner.

It is preferable to arrange the content reproducing apparatus according to the present invention so that the content reproduction means reproduces a plurality of contents while sequentially switching the contents, said content reproducing apparatus further comprising reproduction log information generation means for generating reproduction log information, indicative of the number of times a reproduction target content is switched from a first content to a second content, with respect to each pair of contents in the plurality of contents.

According to the arrangement, it is possible to provide the reproduction log information to the content provider or the content providing apparatus which provides the plurality of contents to the content reproducing apparatus. Thus, the content providing apparatus or the content provider can change the acquisition instruction information included in the content provided to the content reproducing apparatus and can change an order in which the plurality of contents are reproduced by the content reproducing apparatus. As a result, it is possible to exhibit such further effect that the content reproducing apparatus can more efficiently manage contents stored in the content storage section.

It is preferable to arrange the content reproducing apparatus according to the present invention so that: the content reproduction means reproduces plural sets of image data while switching the plural sets of image data in a predetermined order, and the content acquisition means acquires (i) image data which should be reproduced subsequently to currently reproduced image data and (ii) image data which should be reproduced previous to the currently reproduced image data, in accordance with acquisition instruction information included in a content in which the currently reproduced image data is stored.

According to the arrangement, it is possible to exhibit such further effect that an image which should be reproduced can be reproduced without any delay in accordance with the acquired image data at a timing at which image data subsequent to currently reproduced image data should be reproduced or at a timing at which the user gives an instruct to reproduce image data previous to and subsequent to the currently reproduced image data.

It is preferable to arrange the content reproducing apparatus according to the present invention so that: the content reproduction means displays a reduced image group, including reduced images respectively corresponding to the plural sets of image data, as a list in response to request from a user, and the content acquisition means acquires image data of the reduced image group and stores the acquired image data of the reduced image group into a content storage section so that the image data corresponds to deletion condition specifying information for forbidding deletion of the image data of the reduced image group while reproducing the plural sets of image data.

According to the arrangement, the image data of the acquired reduced image group can be stored into the content storage section so that the image data is not deleted while the plural sets of image data are being reproduced. Thus, it is possible to exhibit such further effect that: no matter which image data is being reproduced, the reduced image group can be displayed as a list without any delay at a timing at which the reduced image group is required to be displayed as a list.

A content providing apparatus according to the present invention provides a content to a content reproducing apparatus, said content providing apparatus comprising content providing means for providing a content, including acquisition instruction information for instructing the content reproducing apparatus to acquire a specific acquisition target content, to the content reproducing apparatus.

The content providing apparatus can provide the content reproducing apparatus with a content including acquisition instruction information indicative of an instruction to acquire another content which is highly likely to be reproduced later. That is, it is possible to exhibit such effect that the providing apparatus can instruct the content reproducing apparatus to acquire the aforementioned another content which is highly likely to be reproduced later.

Further, the content reproducing apparatus changes the acquisition instruction information included in the content, thereby freely setting the acquisition target content which is to be acquired by the content reproducing apparatus. That is, the content providing apparatus can easily change the acquisition target content, which is to be acquired by the content reproducing apparatus in response to the instruction thereof, without changing an algorithm for operating the content reproducing apparatus.

In order to solve the foregoing problems, a content reproducing system according to the present invention includes: a content providing apparatus for providing a content; and a content reproducing apparatus for reproducing the content provided by the content providing apparatus, wherein the content reproducing apparatus includes: content reproduction means for reproducing the content provided by the content providing apparatus; and content acquisition means for acquiring a specific acquisition target content from the content providing apparatus in accordance with acquisition instruction information which is indicative of an instruction to acquire the specific acquisition target content and is included in the content reproduced by the content reproduction means.

The content providing apparatus can provide the content reproducing apparatus with the content including the acquisition instruction information indicative of an instruction to acquire another content which is highly likely to be reproduced later as the acquisition target content. Further, the content reproducing apparatus can acquire the acquisition target content in accordance with the acquisition instruction information and can store the acquired content therein. Thus, the content reproducing apparatus can store in advance the aforementioned another content which is highly likely to be reproduced later into the content reproducing apparatus itself.

Moreover, the acquisition target content is specified by the acquisition instruction information and is determined without depending on the user's operation. As a result, it is possible to exhibit such effect that the content reproducing apparatus can store in advance a content which is highly likely to be reproduced later into the content reproducing apparatus itself without forcing the user to make decision and to carry out any operation. Further, an unnecessary content is not acquired in accordance with the user's erroneous decision, so that the content reproducing apparatus is less likely to store an unnecessary content into the content reproducing apparatus itself, thereby more efficiently utilizing a capacity for storing the acquired content.

Further, the content providing apparatus which changes the acquisition instruction information included in the reproduction target content, thereby freely setting the acquisition target content which is to be acquired by the content reproducing apparatus. That is, the content providing apparatus can easily change the acquisition target content the content reproducing apparatus stores into the content storage section without changing an algorithm for causing the content reproducing apparatus to operate.

In order to solve the foregoing problems, a content data structure according to the present invention is a data structure of a content reproduced by a content reproducing apparatus, said data structure comprising acquisition instruction information for instructing the content reproducing apparatus to acquire a specific acquisition target content.

The content can include acquisition instruction information indicative of an instruction to acquire another content which is highly likely to be reproduced later as the acquisition target content. Further, the content reproducing apparatus can acquire the acquisition target content in accordance with the acquisition instruction information and can store the acquired content into the content reproducing apparatus itself. Thus, the content reproducing apparatus can store in advance the aforementioned another content which is highly likely to be reproduced later in the content reproducing apparatus itself.

Moreover, in the content reproducing apparatus for reproducing the content, the acquisition target content is specified by the acquisition instruction information and is determined without depending on the user's operation. Thus, the content reproducing apparatus can store in advance the content which is highly likely to be reproduced later into the content storage section without forcing the user to make decision and to carry out any operation. Further, an unnecessary content is not acquired in accordance with the user's erroneous decision, so that the content reproducing apparatus is less likely to store an unnecessary content into the content reproducing apparatus itself, thereby more efficiently utilizing a capacity for storing the acquired content.

Further, a content provider or a content providing apparatus which provides the reproduction target content to the content reproducing apparatus changes the acquisition instruction information included in the reproduction target content, thereby freely setting the acquisition target content which is to be acquired by the content reproducing apparatus. That is, the content provider or the content providing apparatus can easily change the acquisition target content the content reproducing apparatus stores into the content storage section without changing an algorithm for causing the content reproducing apparatus to operate.

Note that, the acquisition instruction information may be indicative of an instruction to acquire two or more acquisition target contents in a specific order.

Further, the acquisition instruction information may include acquisition timing specifying information indicative of an instruction to acquire the acquisition target content at a specific timing.

Further, the acquisition instruction information may include deletion condition specifying information for specifying a condition under which the acquisition target content is deleted from the content storage section in which the content reproducing apparatus stores the acquisition target content.

Note that, the content reproducing apparatus may be realized by a computer. In this case, the present invention includes (i) a content reproducing program which realizes the content reproducing apparatus in the computer by causing the computer to operate as the aforementioned means and (ii) a computer-readable storage medium in which the program is stored.

As described above, a content reproducing apparatus according to the present invention includes: content reproduction means for reproducing a content; and content acquisition means for acquiring a specific acquisition target content in accordance with acquisition instruction information which is indicative of an instruction to acquire the specific acquisition target content and is included in the content reproduced by the content reproduction means.

Further, as described above, a content reproducing method according to the present invention causes a content reproducing apparatus to reproduce a content, said method comprising the step of acquiring a specific acquisition target content in accordance with acquisition instruction information which is indicative of an instruction to acquire the specific acquisition target content and is included in the content.

Further, as described above, a content providing apparatus according to the present invention provides a content to a content reproducing apparatus, said content providing apparatus comprising content providing means for providing a content, including acquisition instruction information for instructing the content reproducing apparatus to acquire a specific acquisition target content, to the content reproducing apparatus.

Further, as described above, a content reproducing system according to the present invention includes: a content providing apparatus for providing a content; and a content reproducing apparatus for reproducing the content provided by the content providing apparatus, wherein the content reproducing apparatus includes: content reproduction means for reproducing the content provided by the content providing apparatus; and content acquisition means for acquiring a specific acquisition target content from the content providing apparatus in accordance with acquisition instruction information which is indicative of an instruction to acquire the specific acquisition target content and is included in the content reproduced by the content reproduction means.

Thus, a content including acquisition instruction information indicative of an instruction to acquire another content which is highly likely to be reproduced later as the acquisition target content is provided to the content reproducing apparatus, so that the content reproducing apparatus can store in advance the aforementioned another content which is highly likely to be reproduced later into the content storage section without depending on the user's operation.

Further, the content providing apparatus which provides a content to the content reproducing apparatus can easily change the acquisition target content, which the content reproducing apparatus stores in itself, without changing an algorithm for operating the content reproducing apparatus.

For a fuller understanding of the nature and advantages of the invention, reference should be made to the ensuing detailed description taken in conjunction with the accompanying drawings.

### Brief Description of Drawings

Fig. 1

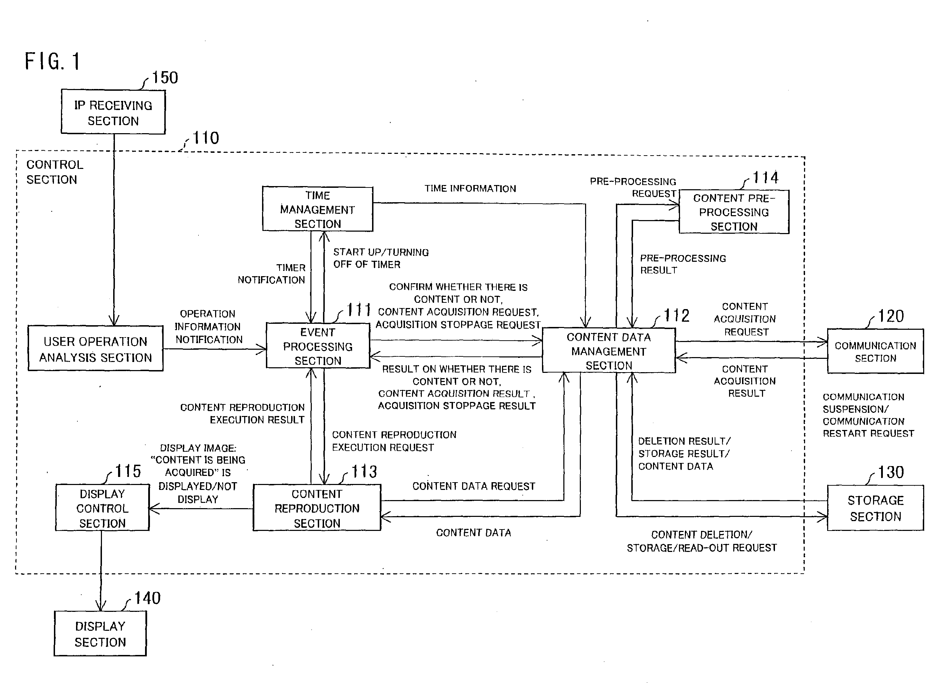

   Fig. 1, showing an embodiment of the present invention, is a block diagram illustrating an essential structure of a control section of a content reproducing apparatus.
Fig. 2

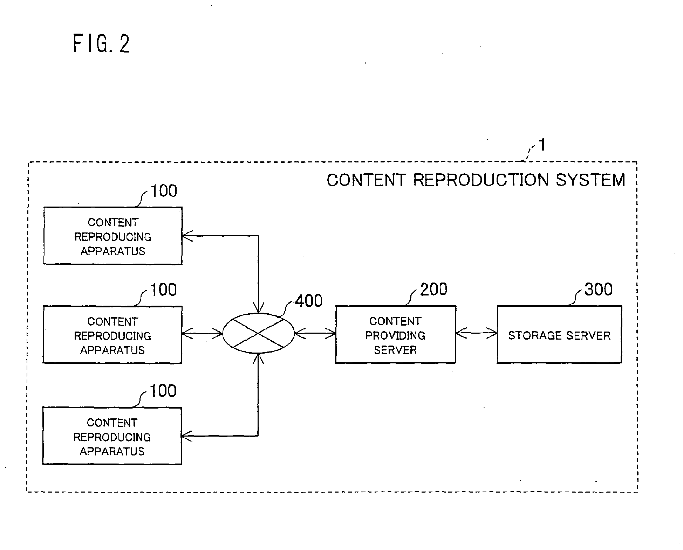

   Fig. 2, showing an embodiment of the present invention, is a block diagram schematically illustrating a structure of the content reproducing system.
Fig. 3

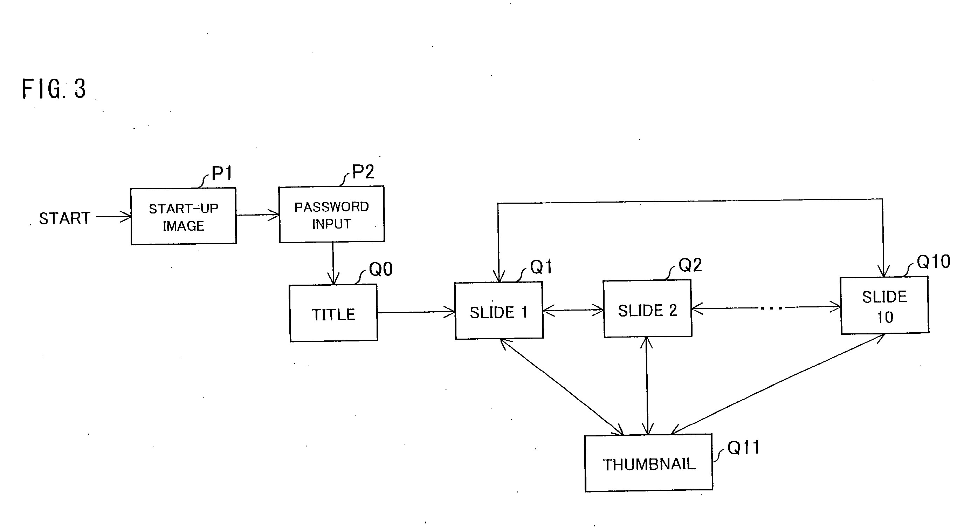

   Fig. 3, showing an embodiment of the present invention, is an image transition diagram illustrating transition of an image displayed in the content reproducing apparatus.
Fig. 4

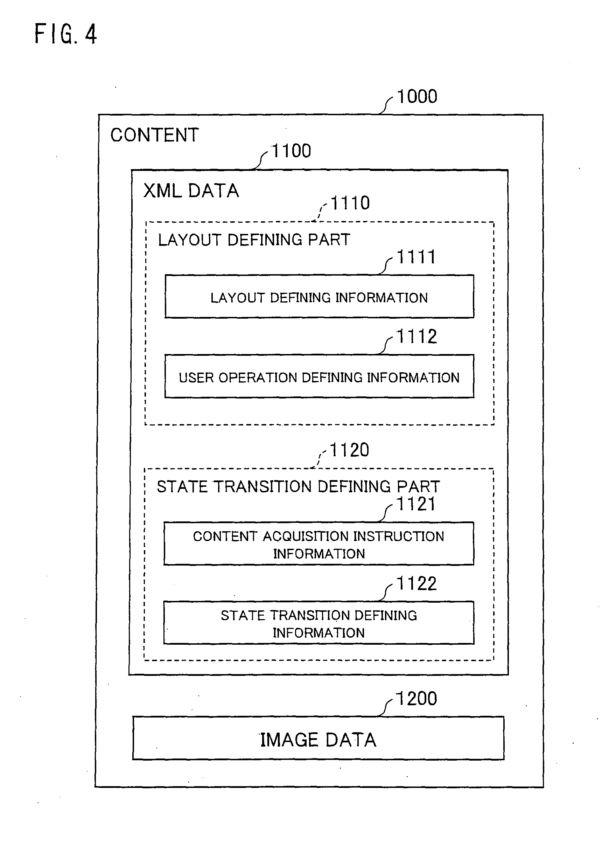

   Fig. 4, showing an embodiment of the present invention, is a data structure diagram illustrating a data structure of a content reproduced in the content reproducing apparatus.
Fig. 5

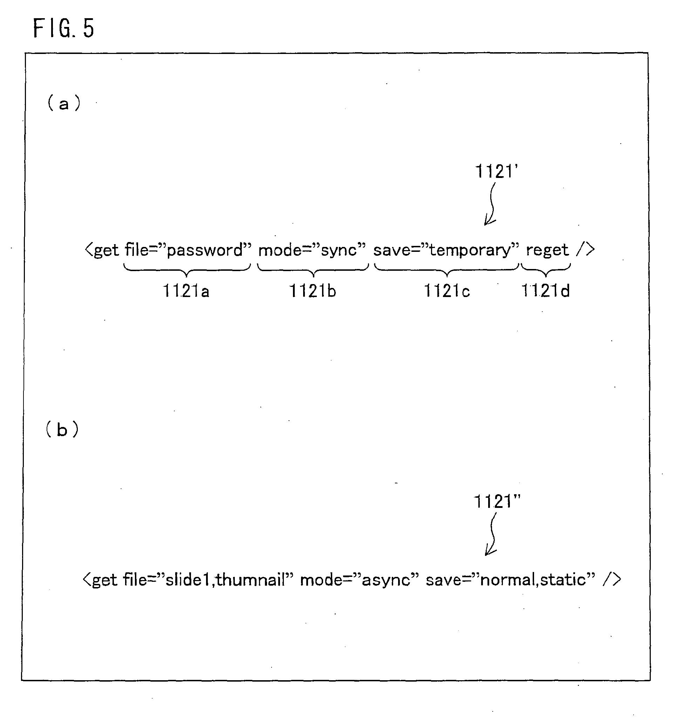

   Fig. 5 is a diagram illustrating an embodiment of the present invention: (a) of Fig. 5 illustrates a specific example of content acquisition instruction information included in a content reproduced in the content reproducing apparatus. (b) of Fig. 5 illustrates other specific example of the content acquisition instruction information.
Fig. 6

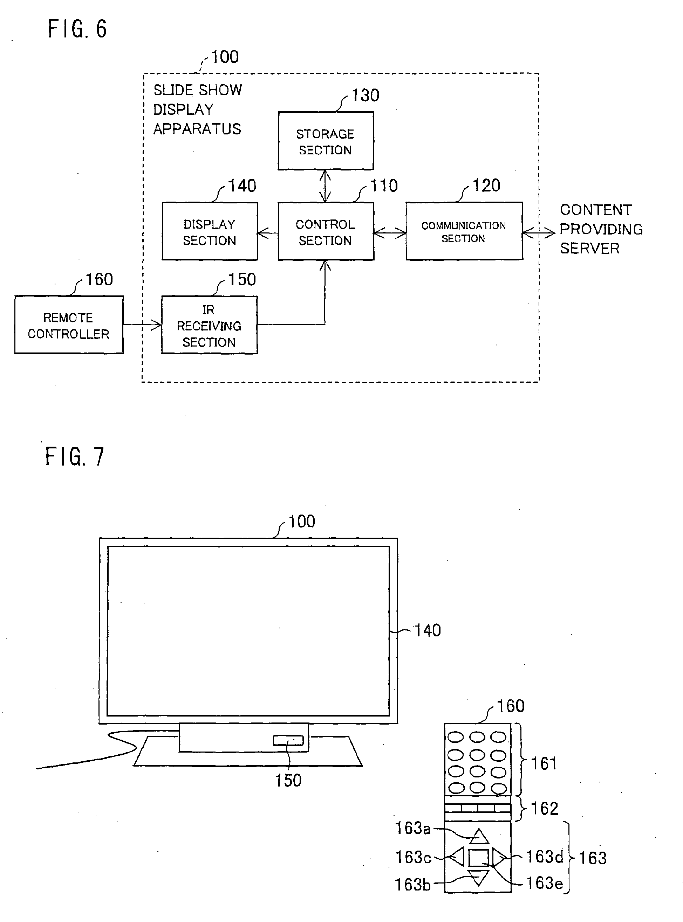

   Fig. 6, showing an embodiment of the present invention, is a functional block diagram schematically illustrating a structure of the content reproducing apparatus.
Fig. 7
   Fig. 7, showing an embodiment of the present invention, is a general view of the content reproducing apparatus realized as a television receiver.
Fig. 8

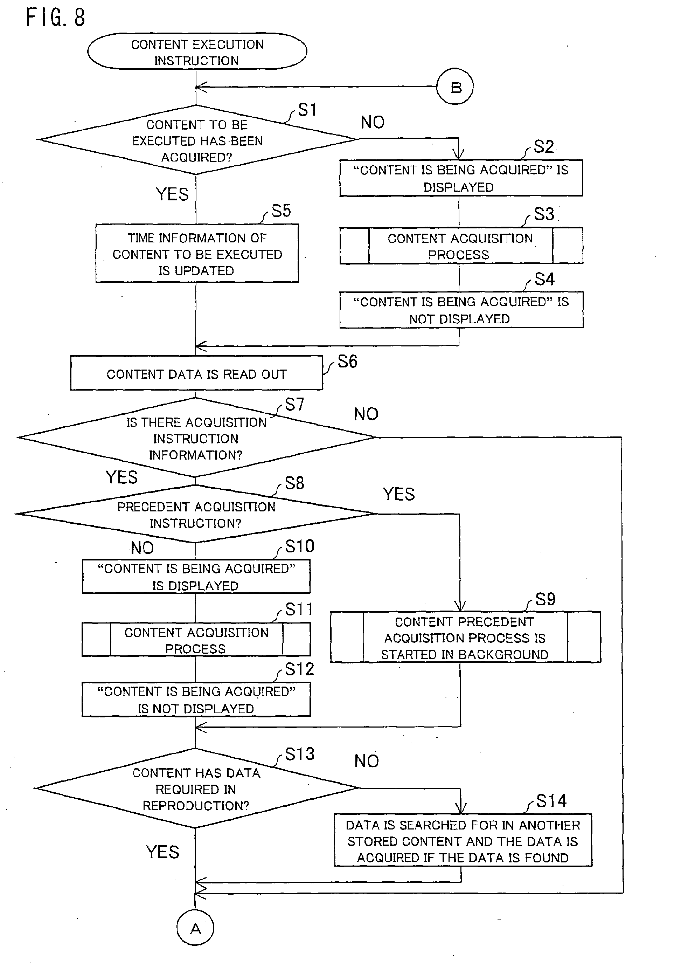

   Fig. 8, showing an embodiment of the present invention, is a flowchart illustrating a flow of a content process (first half) which the content reproducing apparatus carries out with respect to each content.
Fig. 9

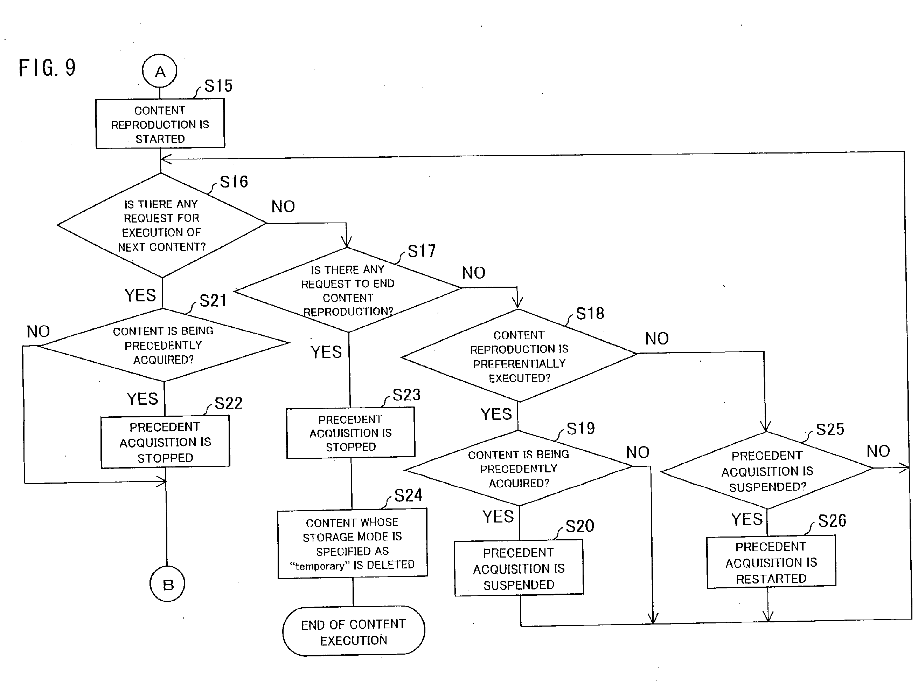

   Fig. 9, showing an embodiment of the present invention, is a flowchart illustrating a flow of a content process (last half) which the content reproducing apparatus carries out with respect to each content.
Fig. 10

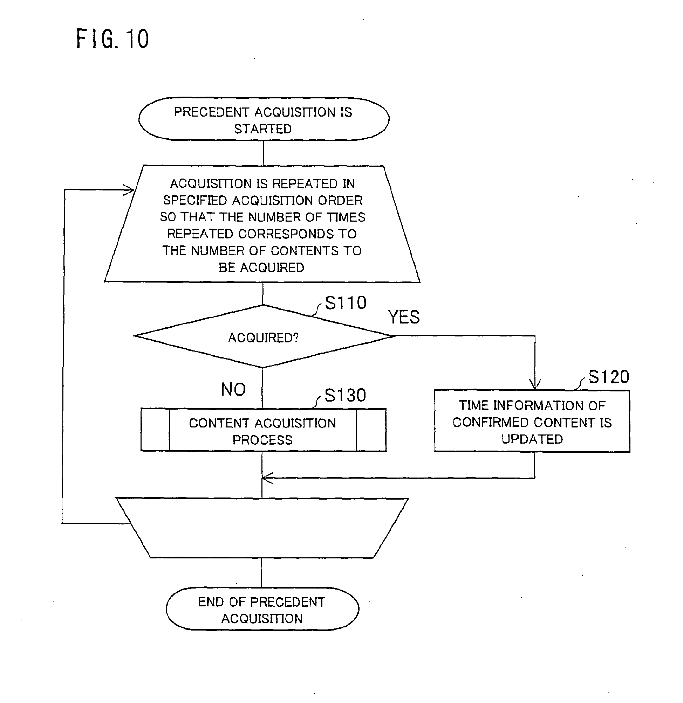

   Fig. 10, showing an embodiment of the present invention, is a flowchart illustrating a content acquisition process included in the content process.
Fig. 11

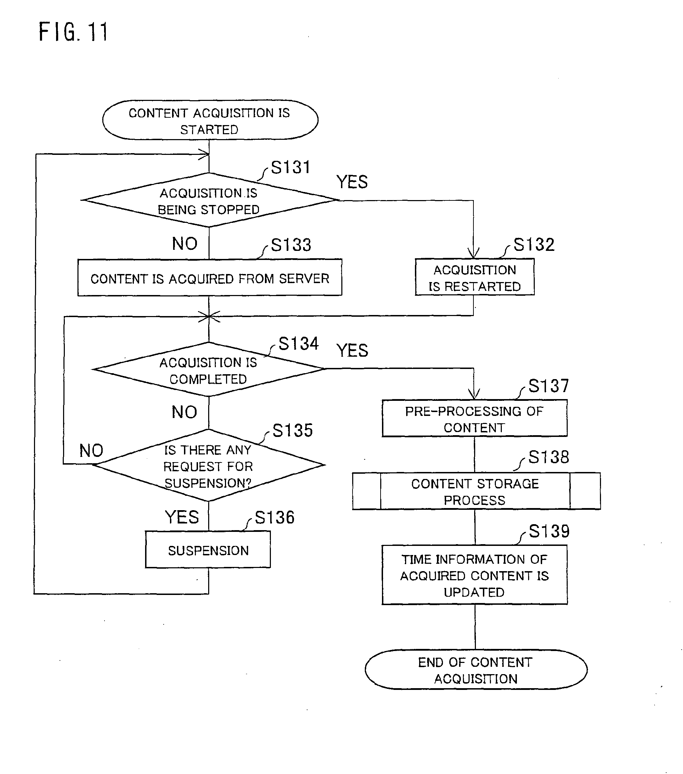

   Fig. 11, showing an embodiment of the present invention, is a flowchart detailing a process for acquiring each content in the content acquisition process illustrated in Fig. 10.
Fig. 12

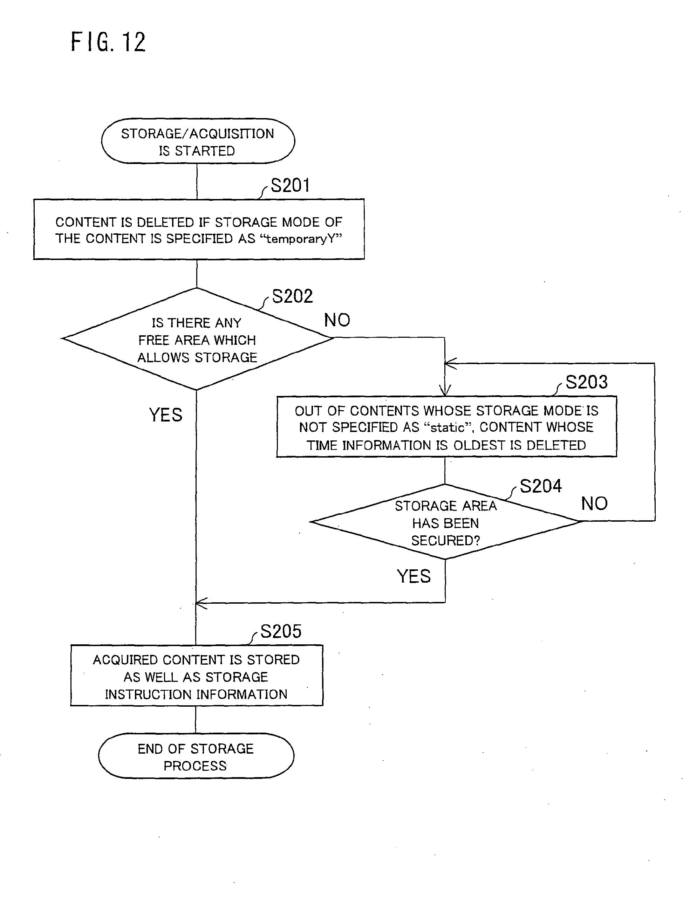

   Fig. 12, showing an embodiment of the present invention, is a flowchart detailing a content storage process included in the process for acquiring each content which process is illustrated in Fig. 11.
Fig. 13

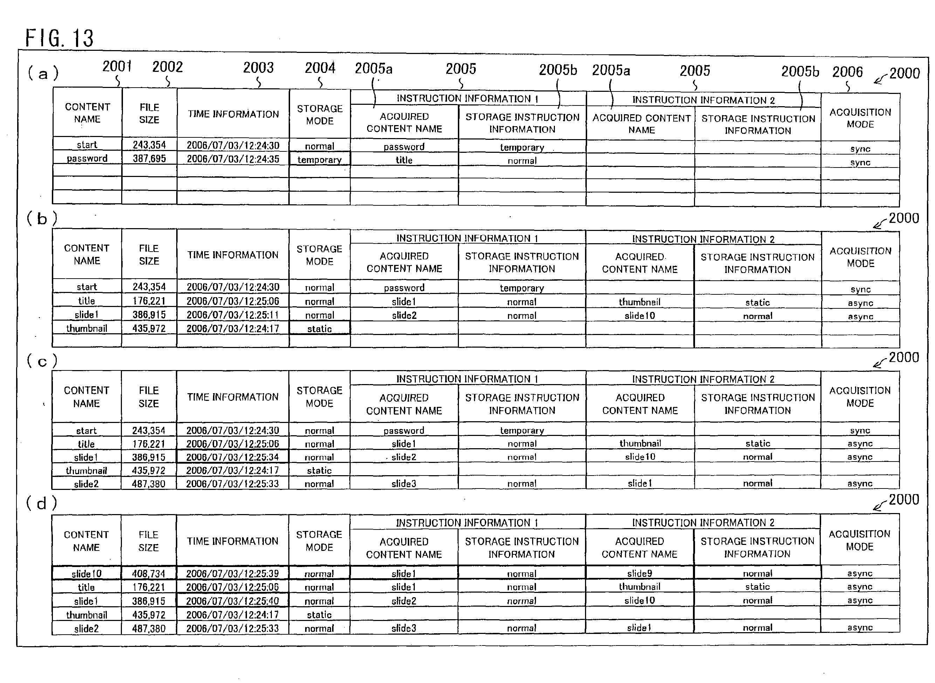

   Fig. 13, showing an embodiment of the present invention, is a diagram illustrating an arrangement of a content management table: (a) of Fig. 13 illustrates a state of the content management table during reproduction of a start-up image content and particularly at a time when acquisition of a password input image content has been completed. (b) of Fig. 13 illustrates a state of the content data management table during reproduction of a title image and particularly at a time when acquisition of a slide image and acquisition of a thumbnail image have been completed. (c) of Fig. 13 illustrates a state of the content management table during reproduction of the slide image content and particularly at a time when acquisition of the slide image content, out of acquisition target contents, has been completed. (d) of Fig. 13 illustrates a state of the content management table during reproduction of the slide image content and particularly at a time when acquisition of the slide image content and acquisition of the slide image content have been completed.
Fig. 14

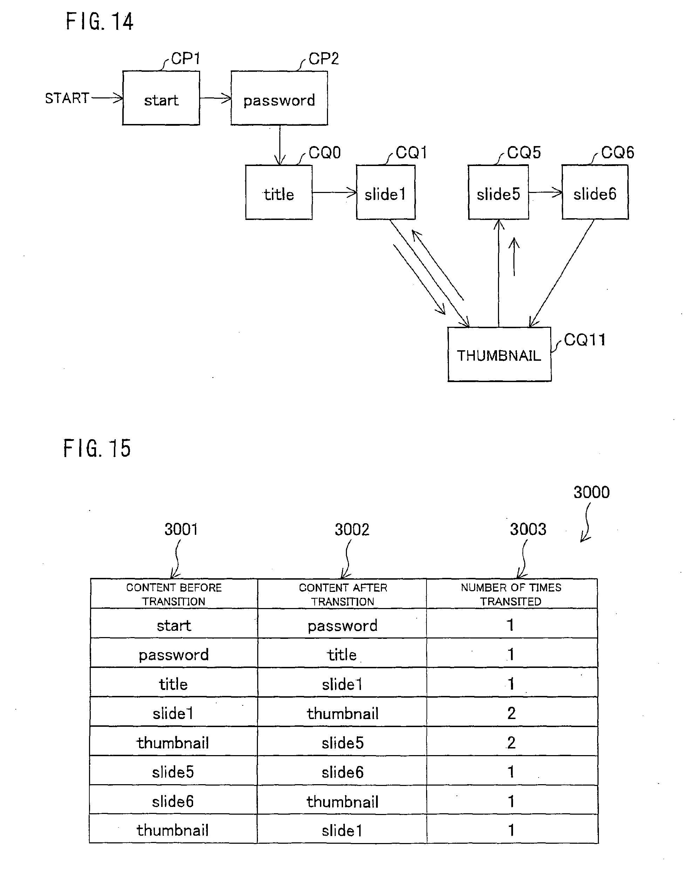

   Fig. 14, showing an embodiment of the present invention, is a transition diagram illustrating an example of transition of a reproduction target content.
Fig. 15
   Fig. 15, showing an embodiment of the present invention, is a diagram illustrating a state of a reproduction log table stored in a storage section in case where the reproduction target content of Fig. 14 transits.
Fig. 16

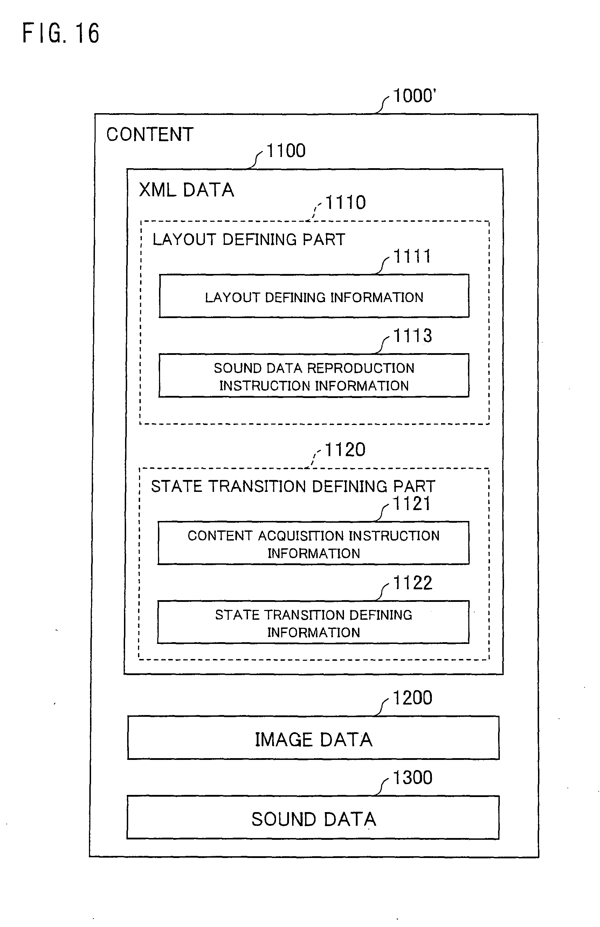

   Fig. 16, showing an embodiment of the present invention, is a data structure diagram illustrating a data structure of a content reproduced by the content reproducing apparatus.
Fig. 17

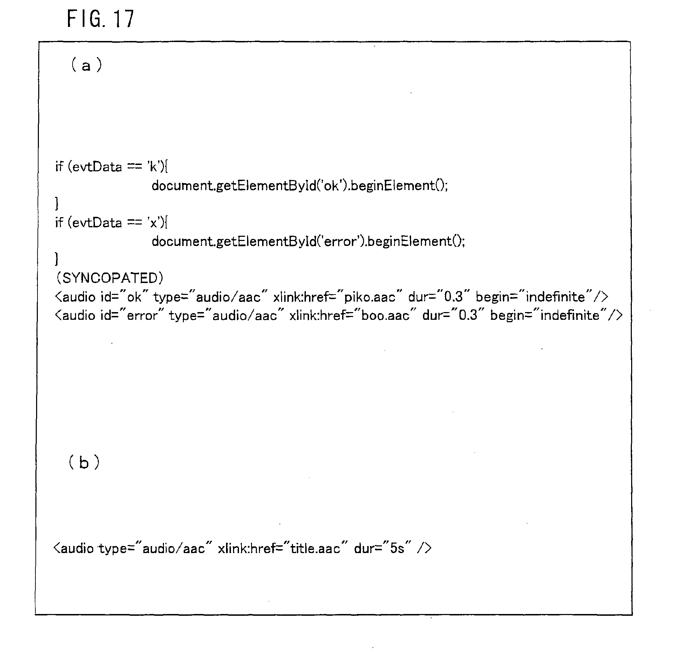

   Fig. 17, showing an embodiment of the present invention, is a diagram illustrating a specific example of sound data reproduction instruction information: (a) of Fig. 17 illustrates sound data reproduction instruction information indicative of an instruction to start reproduction of the sound data in response to an instruction given by inputting a predetermined user operation. (b) of Fig. 17 illustrates sound data reproduction instruction information indicative of an instruction to start reproduction of the sound data in starting display of the image data.
Fig. 18

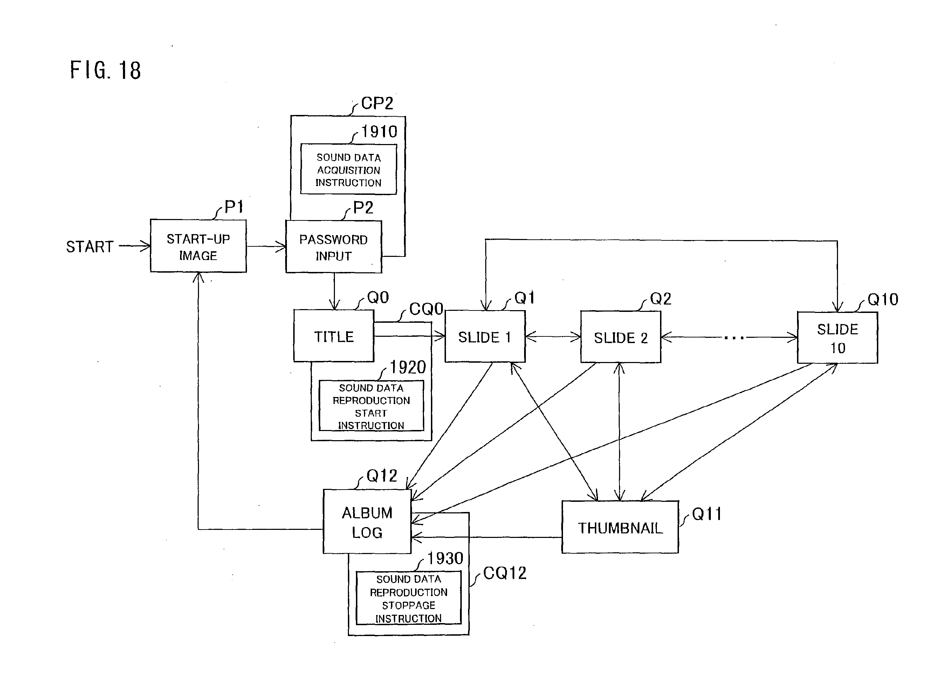

   Fig. 18, showing an embodiment of the present invention, is an image transition diagram illustrating how an image displayed by the content reproducing apparatus transits.
Fig. 19

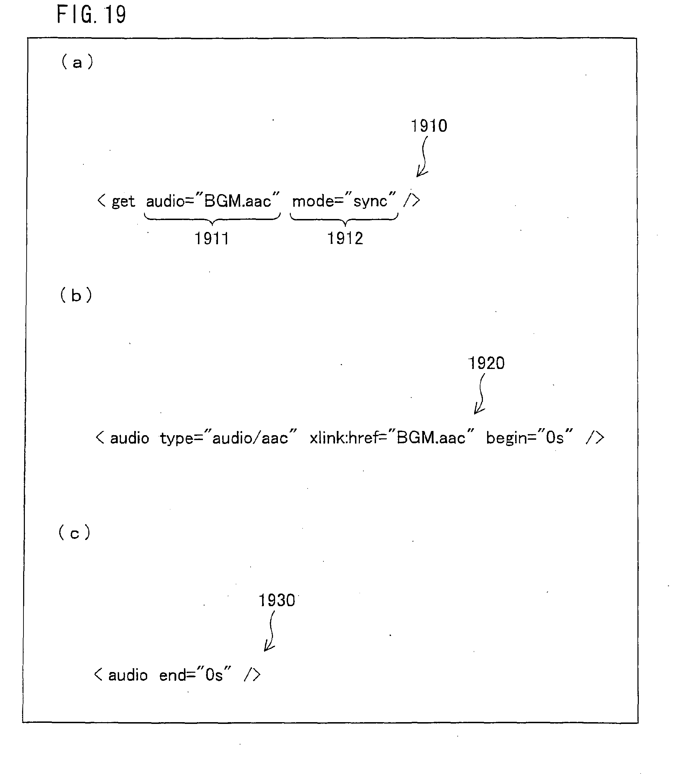

   Fig. 19 is a diagram showing an embodiment of the present invention: (a) of Fig. 19 illustrates a specific example of sound data acquisition instruction information. (b) of Fig. 19 illustrates a specific example of sound data reproduction start instruction information. (c) of Fig. 19 illustrates a specific example of sound data reproduction stoppage instruction information.
Fig. 20

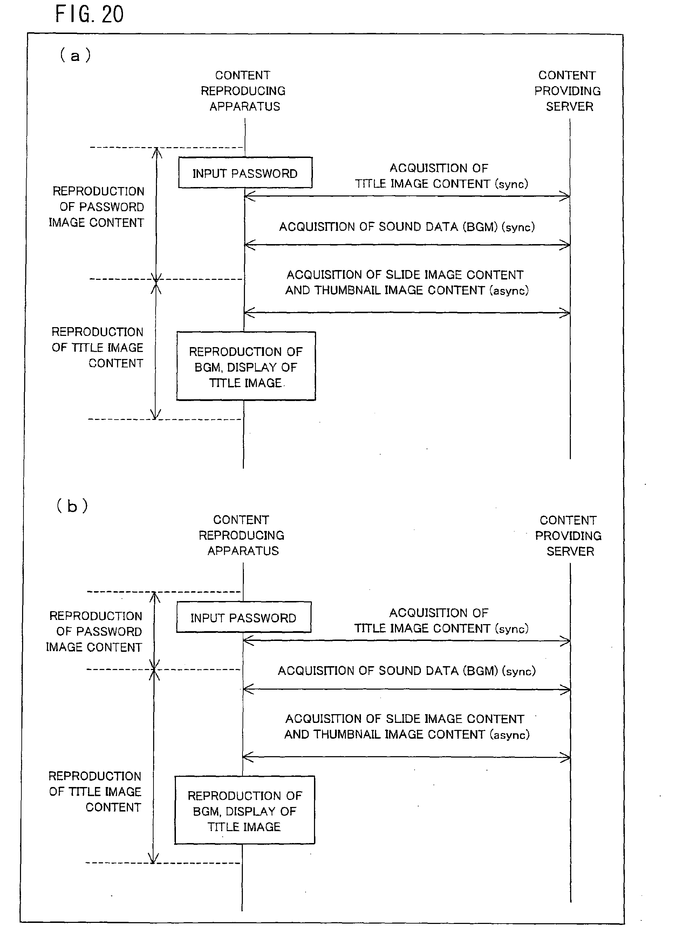

   Fig. 20, showing an embodiment of the present invention, is a timing chart which illustrates a timing at which the content reproducing apparatus acquires the sound data and a timing at which the content reproducing apparatus starts reproduction of the sound data.

### Reference Numerals

1: CONTENT REPRODUCTION SYSTEM
100: CONTENT REPRODUCING APPARATUS
110: CONTROL SECTION
120: COMMUNICATION SECTION
130: STORAGE SECTION (Content storing section)
140: DISPLAY SECTION
150: IR RECEIVING SECTION
160: REMOTE CONTROLLER
111: EVENT PROCESSING SECTION (Reproduction log information generation means)
112: CONTENT DATA MANAGEMENT SECTION (Content acquisition means)
113: CONTENT REPRODUCTION SECTION (Content reproduction means)
114: CONTENT PRE-PROCESSING SECTION (Data format conversion means)
115: DISPLAY CONTROL SECTION (Display control means)
116: TIME MANAGEMENT SECTION
117: USER OPERATION ANALYSIS SECTION
200: CONTENT PROVIDING SERVER (Content providing apparatus)
1000: CONTENT
1121: CONTENT ACQUISITION INSTRUCTION INFORMATION (Acquisition instruction information)

### Description of Embodiments

### (Content reproducing system)

First, a content reproducing system 1 according to the present embodiment is described as follows with reference to Fig. 2 and Fig. 3.

Fig. 2 is a block diagram illustrating a structure of the content reproducing system 1. As illustrated in Fig. 2, the content reproducing system 1 includes at least one content reproducing apparatus 100, a content providing server 200, and a storage server 300.

The content reproducing apparatus 100 is capable of communicating with the content providing server 200 via a communication network 400, and obtains a content from the content providing server 200 so as to reproduce the acquired content. In the present embodiment, the content reproducing apparatus 100 is realized as a television receiver (hereinafter, referred to as "television") installed in a user's house. Note that, the content reproducing apparatus 100 may be arranged in any manner as long as the apparatus has a communication function for receiving a content provided from the content providing server 200 and a reproduction function for reproducing the provided content. Thus, the apparatus is not limited to the television but may be a personal computer, a mobile phone, or a PDA (personal digital assistant), and the like. Further, the content reproducing system 1 may be arranged so as to include a plurality of content reproducing apparatuses 100 arranged in the same manner as the aforementioned content reproducing apparatus 100.

The storage server 300 stores various kinds of data required in synthesizing a content to be provided to the content reproducing apparatus 100, and supplies the data to the content providing server 200. The content providing server 200 synthesizes a content in accordance with the various kinds of data obtained from the storage server 300, and provides the synthesized content to the content reproducing apparatus 100. The content providing server 200 and the storage server 300 are installed, for example, in a business office which runs the content reproducing apparatus 1. Note that, Fig. 2 illustrates the content providing server 200 and the storage server 300 as apparatuses separated from each other, but these servers may be provided in a single housing.

In the present embodiment, the content reproducing system 1 is arranged as a system for realizing a network album service. The content providing server 200 manages photograph groups stored in the storage server 300 with units each of which is referred to as "album". That is, the storage server 300 stores the photograph group belonging to each album so that the photograph group corresponds to an album ID for unambiguously specifying the album, and the content providing server 200 reads out the photograph group belonging to the album from the storage server 300 by specifying the album ID.

While, the content reproducing apparatus 100 specifies, to the content providing apparatus 200, an album ID indicative of a photograph group the user wants to see, and the content reproducing apparatus 100 requests the content providing server 200 to provide a content for displaying photographs belonging to the album. The content providing server 200 synthesizes the content for displaying photographs belonging to the album specified by the album ID and sends the synthesized content to the content reproducing apparatus 100. The content reproducing apparatus 100 reproduces the content acquired from the content providing server 200 so as to display the photographs belonging to the album. As a result, the user of the content reproducing apparatus 100 can see the photographs, included in the specified album, which are managed by the content providing server 200.

The content reproducing system 1 is arranged so as to be capable of causing the content reproducing apparatus 100 to display the photographs belonging to the album as a slide show. With reference to Fig. 3, transition of an image displayed in the content reproducing apparatus 100 is described as follows.

Fig. 3 is an image transition diagram illustrating an example of transition of an image displayed in a display section 140 (described later) of the content reproducing apparatus 100 by reproducing the content provided by the content server apparatus 200. As illustrated in Fig. 3, the display section 140 of the content reproducing apparatus 100 displays a start-up image P1, a password input image P2, a title image Q0, a slide image Q1, a slide image Q2, ···, a slide image Q10, and a thumbnail image Q11.

The start-up image P1 is an initial image displayed first upon receiving from the user an instruction to start up a slide show reproduction function, and allows the user to input an album ID of an album the user wants to see. When the user inputs the album ID while the start-up image P1 is being displayed, the content reproducing apparatus 100 causes the image to transit into the password input image P2. The password input image P2 allows the user to input a password. When the user inputs a password while the password input image P2 is being displayed, the content reproducing apparatus 100 sends the inputted album ID and the inputted password to the content providing server 200. When the content providing server 200 allows the user to see the album specified by the album ID in accordance with the password, the content reproducing apparatus 100 can start reproduction of the album as a slide show.

The title image Q0 is an initial image displayed in starting the reproduction of the slide show and displays a title of the album reproduced as a slide show. The slide show images Q1 to Q10 are images for displaying photographs belonging to each album, and a slide show reproducing apparatus 100 sequentially displays the slide images Q1 to Q10 while switching these images at predetermined slide image switching intervals, thereby displaying the photograph group belonging to the album as a slide show. Following to the slide image Q 10, the slide image Q1 is displayed again so that the slide images Q1 to Q10 are repeatedly displayed as a slide show.

When the user gives an instruction to display thumbnails while the slide images Q1 to Q10 are being displayed, the content reproducing apparatus 100 displays the thumbnail image Q11. The thumbnail image Q11 is an image for displaying a list of ten reduced images (thumbnails) corresponding to the slide images Q1 to Q10. When the user selects a specific photograph in accordance with the thumbnail image Q11, the content reproducing apparatus 100 displays a slide image of the selected photograph again and starts reproduction of the slide show again from the selected slide image.

The content providing server 200 provides a content for displaying each aforementioned image to the content reproducing apparatus 100. Thus, from the content providing server 200, the content reproducing apparatus 100 acquires, a start-up image content CP1 for displaying the start-up image P1, a password input image content CP2 for displaying the password input image P2, a title image content CQ0 for displaying the title image Q0, a slide image content CQ1 for displaying the slide image Q1, ···, a slide image content CQ10 for displaying the slide image Q10, and a thumbnail image content CQ11 for displaying the thumbnail image Q11 (contents are not shown). The content reproducing apparatus 100 stores the contents, acquired from the content providing server 200, into the storage section 130 (described later) and reads out the contents at predetermined timings so as to reproduce the contents, thereby realizing the image transition illustrated in Fig. 3.

In case of realizing the content reproducing apparatus 100 as a television, a data size of a content for displaying a full high vision image is about 500KB for each image. While, a storage capacity of the storage section 130 which can be installed in a television is about 3.5MB in consideration for both the size and cost. Thus, the number of contents which can be stored in the storage section 130 at once is limited to about 6 to 7, so that it is impossible to store the aforementioned 14 contents into the storage section 130. Therefore, the content reproducing apparatus 100 precedently acquires a content which is highly likely to be reproduced subsequently to a currently reproduced content and stores that content into the storage section 130. Further, out of contents stored in the storage section 130, a content which is least likely to be reproduced is deleted.

Table 1 illustrates a relationship between a reproduction target content which is being reproduced and an acquisition target content which is acquired while that content is being reproduced. In Table 1, an acquisition target content 1 is the first content that is acquired while a corresponding reproduction target content is being reproduced, and an acquisition target content 2 is the second content that is acquired subsequently to the acquisition target content 1.

**[Table 1]**

| REPRODUCTION TARGET CONTENT | ACQUISITION TARGET CONTENT 1 | ACQUISITION TARGET CONTENT 2 |
|---|---|---|
| START-UP IMAGE CONTENT CP1 | PASSWORD INPUT IMAGE CONTENT CP2 (specified as "temporary") | |
| PASSWORD INPUT IMAGE CONTENT CP2 | TITLE IMAGE CONTENT CQ0 (normal acquisition) | |
| TITLE IMAGE CONTENT CQ0 | SLIDE IMAGE CONTENT CQ1 | THUMBNAIL IMAGE CONTENT CQ11 (specified as "static") |
| SLIDE IMAGE CONTENT CQ1 | SLIDE IMAGE CONTENT CQ2 | SLIDE IMAGE CONTENT CQ10 |
| SLIDE IMAGE CONTENT CQ2 | SLIDE IMAGE CONTENT CQ3 | SLIDE IMAGE CONTENT CQ1 |
| THUMBNAIL IMAGE CONTENT CQ11 | NO | NO |

As illustrated in Table 1, while the start-up image content CP1 is being reproduced for example, the password input image content CP2 which is to be subsequently reproduced is acquired. Further, while the password input image content CP2 is being reproduced, the title image content CQ0 which is to be subsequently reproduced is acquired. Further, while the title image content CQ0 is being reproduced, the slide image content CQ1 is acquired and also the thumbnail image content CQ11 which is likely to be reproduced while the slide image contents CQ1 to CQ10 are being reproduced is acquired. Further, while the slide image contents CQ1 to CQ2 are being reproduced, a subsequent slide image content and a previous slide image content are acquired. While the thumbnail image content CQ11 is being reproduced, it is impossible to specify a possibility of subsequent reproduction, so that any content is not acquired.

The content acquisition process illustrated in Table 1 is carried out in accordance with content acquisition instruction information included in a reproduction target content which is being reproduced. In reproducing the content provided from the content providing server, the content reproducing apparatus 100 refers to the content acquisition instruction information included in the reproduction target content so as to carry out the content acquisition process illustrated in Table 1.

The content acquisition instruction information includes acquisition timing specifying information for specifying a timing at which the acquisition target content is acquired. The content reproducing apparatus 100 acquires the acquisition target content in accordance with the timing specifying information. The title image content CQ0 is reproduced when a password inputted by the user during reproduction of the password input image content CP2 is correct, and acquisition of the title image content CQ0 cannot be started before starting the reproduction of the password input image content CP2. While, acquisition of an acquisition target content other than the title image content CQ1 can be started before starting the reproduction of the password input image content CP2. Thus, content acquisition instruction information included in the reproduction target content other than the password input image content CP2 includes acquisition timing specifying information indicative of an instruction to start the process for acquiring the acquisition target content before starting the reproduction of the reproduction target content CP2.

Further, the content acquisition instruction information includes deletion condition specifying information for specifying a condition under which the acquisition target content having been acquired and stored in the storage section 130 is deleted, and the acquisition target content is stored in the storage section 130 so as to correspond to the deletion condition specifying information. The content reproducing apparatus 100 deletes the acquisition target content stored in the storage section 130 in accordance with the deletion condition specifying information. The start-up image content CP1 is reproduced only once in starting up the slide show reproduction function and is not referred to later. Thus, the start-up image content CP1 is stored in the storage section as a temporary mode, that is, as a content which is to be deleted right after the end of reproduction of the content. Further, the thumbnail image content CQ11 is highly likely to be reproduced at any time during reproduction of the slide image contents CQ1 to CQ10. Thus, the thumbnail image content CQ11 is stored in the storage section 130 as a static mode, that is, as a content which cannot be deleted until a predetermined time.

As to (i) a data structure of the content including the aforementioned content acquisition instruction information and (ii) the content reproducing apparatus 100 which carries out the content acquisition process in accordance with the content acquisition instruction information included in the content, detail explanations thereof will be given later.

Note that, the content reproducing apparatus 100 utilizes not only the contents provided from the content providing server 200 but also (i) a setting file in which various kinds of parameter values commonly referred to during reproduction of the contents are stored and (ii) a common utilization file in which display data for displaying various kinds of images which are likely to be commonly displayed during reproduction of the contents is stored, so as to realize the slide show reproduction. In the setting file, slide image switching time information for specifying a slide image switching interval, focus position information indicative of what number the currently displayed slide image corresponds to, and similar information are stored. Further, in the utilization file, error image display data for displaying an error image if an error occurs, dialogue display data for displaying a dialogue image, and similar data are stored. As long as these files are stored in the storage section 130 of the content reproducing apparatus 100 at the time of slide show reproduction, these files may be held in the storage section in advance, or it may be so arranged that: these files are acquired from the content providing server 200 right after start up of the slide show reproduction function and then are stored in the storage section 130. Further, it is preferable that these files are stored in the storage section 130 as a static mode, that is, as a content which are not deleted in a predetermined period so that these files can be used at any time during reproduction of the slide show.

As described above, the content reproducing system 1 according to the present embodiment realizes a network album service which allows the content reproducing apparatus 100 to display photographs, belonging to an album specified by the user, as a slide show. However, application of the present invention is not limited to the network album service. That is, as in the aforementioned network album service, the present invention is applicable to a general content reproducing system in which a plurality of contents are provided from a content providing apparatus to a content reproducing apparatus so that the content reproducing apparatus reproduces the plurality of contents in a predetermined order. An example thereof is a content reproducing system which allows a content reproducing apparatus to reproduce contents including media data such as still images, moving images, sound, instead of photographs, in a predetermined order.

### (Data structure of content)

Next, with reference to Fig. 4 and Fig. 5, a data structure of a content provided from the content providing server 200 to the content reproducing apparatus 100 is described as follows.

Fig. 4 is a data structure diagram illustrating a structure of a content provided from the content providing server 200 to the content reproducing apparatus 100. in Fig. 4, as a typical structure of the content provided to the content reproducing apparatus 100, a data structure of the aforementioned slide image content CQ1 is illustrated.

As illustrated in Fig. 4, the slide image content CQ1 includes XML (extensible Markup Language) data 1100 and image data 1200. The XML data 1100 includes a below-described layout defining part 1110 and a below-described state transition defining part 1120. While, the image data 1200 included in the slide content CQ1 is image data indicative of the first photograph of the album.

In the XML data 1100, the layout defining part 1110 is a part described with SVG (Scalable Vector Graphics) and includes layout defining information 1111 and user operation defining information 1112. The layout defining information 1111 is information for specifying an object to be described on an image and a layout of the object on the image. Here, the layout defining information 1111 indicates that the image data 1200 which is a photograph included in the content CQ1 is to be described in a specific description area of the slide image Q1. Further, the user operation defining information 1112 is information for specifying a process which should be carried out when the specific object described on the image is selected by the user.

While, the state transition defining part 1120 of the XML data 1100 is a part described with MTD (Message Template Definition) and the like and includes content acquisition instruction information 1121 and state transition specifying information 1122. The content acquisition instruction information 1121 is information for giving an instruction to acquire a specific acquisition target content. Here, the content reproducing apparatus is instructed to acquire a slide image content CQ2 which is a slide image content subsequent to the content CQ1 and to acquire a slide image content CQ10 which is a content reproduced previous to the content. The state transition specifying information 1122 is information for specifying a content which should be reproduced subsequent to the content and a timing at which the content is switched to the subsequent content as the reproduction target content. Here, the content reproducing apparatus is instructed to switch the content CQ1 to the subsequent slide image content CQ2 as the reproduction target content when a predetermined slide reproduction time passes after starting reproduction of the content CQ1 or when the content reproducing apparatus receives from the user a next image display instruction to display a next image and is instructed to switch the content to the previous slide image content CQ10 as the reproduction target content when the content reproducing apparatus receives a previous image display instruction to display the previous image.

Each of the content acquisition instruction information 1121 and the state transition specifying information 1122 is a kind of a command for instructing the content reproducing apparatus to carry out a specific process. Not only the content acquisition instruction information 1121 and the state transition specifying information 1122 but also various kinds of commands such as a command to carry out a process for displaying an image and a command to carry out a process for sending a password to the content providing server so as to be authenticated. Generally, the content reproducing apparatus 100 carries out the commands described in the state transition defining section 1120 in an order described in the state transition defining part 1120.

Also other content provided to the content reproducing apparatus 100 has a data structure similar to that of the slide image content CQ1 illustrated in Fig. 4 and includes content acquisition instruction information. The content acquisition instruction information is a characteristic feature of the present invention, so that more detail explanations thereof will be given with reference to Fig. 5.

Fig. 5 illustrates examples of description of the content acquisition instruction information. Specifically, content acquisition instruction information 1121' illustrated in (a) of Fig. 5 is included in the start-up image content CP1, and content acquisition instruction information 1121" is included in the title image content CQ0.

As illustrated in (a) of Fig. 5, the content acquisition instruction information 1121' can include a file attribute 1121a for specifying an acquisition target content, a mode attribute (mode specifying information) 1121b for specifying a timing at which the acquisition target content is acquired, a save attribute (deletion condition specifying information) 1121c for specifying a condition under which a content having been acquired and stored in the storage section is deleted, and a reget attribute 1121d indicative of an instruction to newly acquire an acquisition target content regardless of whether the acquisition target content is cached or not.

As to the file attribute 1121a, acquisition target content specifying information for specifying an acquisition target content can be used as an attribute value. In case where there are a plurality of acquisition target contents, the acquisition target content specifying information of the contents are listed in an order in which the contents were acquired, thereby specifying the acquisition order. The acquisition target content specifying information may be information, such as URI (Uniform Resource Identifier), for unambiguously specifying the acquisition target content in the network. However, under such condition that the content providing server 200 for providing contents and the reproduction target album are specified in advance as in the present embodiment, any information may be used as long as the information can unambiguously specify the acquisition target content out of a content group belonging to the album managed by the content providing server 200.

In the example illustrated in (a) of Fig. 5, the password input image content CP2 is specified by using a title "password". Further, in the example illustrated in (b) of Fig. 2, the slide image content CQ1 and the thumbnail image content CQ11 are respectively specified by using a title "slide 1" and a title "thumbnail" respectively.

As to the mode attribute 1121b, an attribute value thereof may be execution mode specifying information indicative of whether or not to execute the acquisition process for acquiring the acquisition target content in parallel to a process which should be subsequently carried out. Here, the process which should be subsequently executed is a process which is executed in accordance with a command described subsequent to the content acquisition instruction information 1121' in the state transition defining information. As the attribute value the mode attribute 1121b can have, there are prepared two attribute values, e.g., "async" which indicates start of the next process before completion of the acquisition process and "sync" which indicates start of the next process after completion of the acquisition process. In case where "async" is specified as the mode attribute 1121b, the content reproducing apparatus 100 executes the next command immediately after executing the acquisition process. As a result, the acquisition process and the next process are carried out in parallel. While, in case where "sync" is specified as the mode attribute 1121b, the content reproducing apparatus 100 executes the next process after completion of the acquisition process. In other words, the start of the next process is delayed until completion of the acquisition process. Note that, in case where there are a plurality of acquisition target contents specified by the file attribute 1121 a, acquisition timing specifying information sets corresponding to the acquisition target contents are listed, thereby specifying each timing at which each of the acquisition target contents is acquired.

For example, the content acquisition instruction information 1121' (see (a) of Fig. 5) included in the start-up image content CP1 indicates that the password input image content CP2 is to be acquired in the "sync" mode. Thus, the content reproducing apparatus 100 waits for completion of acquisition of the password input image content CP2 and then starts the next process. In the state transition defining part (not shown) of the start-up image content CP1, there is described state transition specifying information for specifying a process in which the reproduction target content is transited to the password input image content CP2 so that the state transition specifying information follows to the content acquisition instruction information 1121'. Thus, the content reproducing apparatus 100 waits for completion of acquisition of the password input image content CP2, and then transits the start-up image content CP1 to the password input image content CP2 as the reproduction target content, so as to start reproduction of the password input image P2.

Further, the content acquisition instruction information (see (b) of Fig. 5) included in the title image content CQ0 indicates that the slide image content CQ1 which is a first acquisition target content is to be acquired in the "sync" mode and the thumbnail image content CP11 which is a second acquisition target content is to be acquired in the "async" mode. Thus, the content reproducing apparatus 100 waits for completion of acquisition of the slide image content CQ0, and then starts the next process. In the state transition defining part (not shown) of the title image content CQ1, there is described state transition specifying information which specifies a process for transiting the content to the slide image content CQ1 as the reproduction target content so that the state transition specifying information follows to the content acquisition instruction information 1121". Thus, the content reproducing apparatus 100 waits for completion of acquisition of the title image content CQ0, and then transits the title image content CQ0 to the slide image content CQ1, so as to reproduce the slide image content CQ1. It is indicated that the thumbnail image content CP11 is acquired in the async mode, so that transition of the reproduction target content is carried out regardless of whether acquisition of the thumbnail image content CP11 has been completed or not, and the process for acquiring the thumbnail image content CP11 is continued also during reproduction of the slide image Q1 after the transition.

As to the save attribute 1121c, an attribute value thereof may be deletion condition specifying information for specifying a condition under which the acquisition target content having been acquired and stored (cached) in the storage section can be deleted. In case where there are a plurality of acquisition target contents, deletion condition specifying information sets corresponding to the acquisition target contents are listed so that the number of the deletion condition specifying information sets corresponds to the number of the acquisition target contents. Specifically, as the attribute value the save attribute 1121a can have, there are prepared: "temporary" indicative of an instruction to necessarily delete the content after reproducing the content; "static" which does not allow deletion of the content for a predetermined period; "counter=x" which allows deletion of the content in case where the number of times reproduction is carried out becomes x-number of times; and "timer=y" which allows deletion of the content in case where a time passage from a reference time becomes a specific time y. Further, as a deletion condition in case where none of the aforementioned attribute values are specified or in case where the attribute value "normal" is specified as the save attribute 1121c, there is used such a deletion condition that the content can be deleted if the time passage from the reference time is longer than those of other contents. Note that, the reference time may be arbitrarily set. In the present embodiment, later one of (i) a storage time in which the content is stored in the storage section 130 and (ii) a read-out time in which the content is read out from the storage section 130 is adopted as the reference time, thereby efficiently deleting a content which is less used.

In the example illustrated in (a) of Fig. 5, it is indicated that the password image content CP2 having been stored is to be stored in the storage section in the "temporary" mode, that is, the password image content CP2 is to be stored as a content which is to be necessarily deleted after reproducing the content. In the example illustrated in (b) of Fig. 5, it is indicated that the slide image content CQ1 which is the first acquisition target content is to be stored in the "normal" mode, that is, contents whose time passages from the reference time are longer are to be deleted earlier. At the same time, it is indicated that the thumbnail image content CQ11 which is the second acquisition target content is to be stored in the "static" mode, that is, the content is to be stored as a content which cannot be deleted for a predetermined period (for example, for a period in which execution of a program for realizing the slide show reproduction is finished in accordance with a predetermined user operation).

Note that, although not shown in the example of Fig. 5, the save attribute is set as "counter=3" for example, so that it is possible to cache the acquisition target content in the storage section as a content which cannot be deleted until the content is reproduced three times. Further, the save attribute is set as "timer=1d" for example, so that it is possible to cache the acquisition target content in the storage section as a content which cannot be deleted until one day passes from the reference time.

The reget attribute 1121d is an attribute for indicating that an acquisition target content is to be newly acquired regardless of whether the acquisition target content is cached or not. In case where the reget attribute is specified as in the content acquisition information 1121' of (a) of Fig. 5, the acquisition target content is compulsorily acquired again. Inversely, in case where the reget attribute is not specified as in the content acquisition information 1121" of (b) of Fig. 5, it is confirmed whether the acquisition target content has been cached in the storage section or not, and the process for acquiring the acquisition target content is omitted if the acquisition target content has been stored in the cache.

### (Structure of the content reproducing apparatus)

With reference to Fig. 1, Fig. 6, and Fig. 7, a structure of the content reproducing apparatus 100 is described as follows.

Fig. 6 is a block diagram schematically illustrating the structure of the content reproducing apparatus 100.

As illustrated in Fig. 6, the content reproducing apparatus 100 includes a control section 110, a communication section 120, the storage section 130, a display section 140, and an IR receiving section 150.

The communication section 120 is a communication interface via which various kinds of data are sent to and received from the content providing server 200. The control section 110 sends a content request to the content providing server 200 and receives the content from the content providing server 200.

The storage section 130 is a storage device such as a memory. The control section 110 stores the content, acquired from the content providing server 200 via the communication section 120, into the storage section 130. Further, the control section 110 reads and reproduces the content, stored in the storage section 130, at any time until the content is deleted.

The display section 140 is a display device such as a liquid crystal panel and a cathode-ray tube. The control section 110 displays an image, obtained by reproducing the content, in the display section 140, so as to indicate the image to the user.

The IR receiving section 150 is a communication interface via which an infrared data communication is carried out with a remote controller 160. The remote controller 160 is a physical user interface which allows the user to operate, and the remote controller 160 sends operation information indicative of the user operation to the IR receiving section 150 of the content reproducing apparatus 100 with the operation information incorporated in an infrared ray carrier wave. The control section 110 can carry out a process corresponding to the user operation in accordance with the operation information obtained via the IR receiving section 150.

The control section 110 controls the respective sections so as to carry out: a content acquisition process in which a content is acquired from the content providing server 200 via the communication section 120; a content reproduction process in which the content stored in the storage section 130 is read out and reproduced; and a content management process in which the acquired content is stored in the storage section 130 and the stored content is deleted at an appropriate timing. Note that, a detail arrangement of the control section 110 will be described later with reference to another drawing.

Fig. 7 is a conceptual diagram of the content reproducing apparatus 100. As illustrated in Fig. 7, the content reproducing apparatus 100 of the present embodiment is realized as a television receiver (hereinafter, referred to as "television"). In case of realizing the content reproducing apparatus 100 as the television receiver, the display panel included in the television receiver can be used as the display section 140, so that it is possible to realize vigorous slide show reproduction.

Fig. 7 also illustrates an example of an arrangement of the remote controller 160. In Fig. 7, the remote controller 160 includes a numerical button section 161 and a cross button section 163.

The numerical button section 161 includes at least numerical buttons corresponding to 0 to 9. The user pushes the buttons as necessary so as to input numbers of any digits. The user inputs numerical values such as an album ID via the numerical button section 161.

Further, a command button section 162 includes one or more command buttons. Each of the buttons is set in advance so as to correspond to a specific instruction or is set according to a process condition so as to correspond to a specific instruction. The user pushes each command button so as input the instruction corresponding to the command button. For example, by pushing the button included in the command button section 162, it is possible to input a start-up instruction for instructing the content reproducing apparatus 100 to start up the slide show function.

Further, the cross button section 163 includes: four buttons respectively corresponding to an upper position, a lower position, a left position, and a right position; and a determination button disposed in a center of the four buttons. The user pushes the upper, lower, left, and right buttons, so as to specify a position of a desired object in an object group displayed in the display section 140, and the user pushes the determination button so as to select an object specified at this time. For example, the user can specify and select a desired image from thumbnails displayed as a thumbnail list. Further, the user pushes the right button when the slide image for displaying images (photographs) is displayed, thereby inputting a next image display instruction for giving an instruction to display a next image subsequent to the currently displayed image. Further, the user pushes the left button so as to input a previous image display instruction for giving an instruction to display an image previous to the currently displayed image.

Fig. 1 is a block diagram illustrating an essential arrangement of the control section 110 included in the content reproducing apparatus 100.

As illustrated in Fig. 1, the control section 110 includes an event processing section 111, a content management section (content acquisition means) 112, a content reproduction section (content reproduction means) 113, a content pre-processing section (data format conversion means) 114, a display control section 115, a time management section 116, and a user operation analysis section 117.

The content management section 112 acquires a content from the content providing server 200 in accordance with an instruction given by the event processing section 111. Further, the content management section 112 stores the content, acquired from the content providing server 200, into the storage section 130, and manages the content in accordance with a below-described content management table. The characteristic feature of the content reproducing apparatus 100 is a process carried out by the content management section 112, so that a detail process carried out by the content management section 112 will be described later with reference to a flowchart.

The content reproduction section 113 is a block for reproducing a content stored in the storage section 130 in accordance with an instruction given by the event processing section 111. Specifically, when receiving, from the event processing section 111, a content reproduction instruction for reproducing a specific reproduction target content, the content reproduction section 113 requests the content management section 112 for content data used to reproduce the reproduction target content. The content management section 112 reads out the layout defining information, stored in the reproduction target content, from the storage section 130, and returns the data to the content reproduction section 113 as content data. Further, in case where the layout defining information of the reproduction target content specifies media data such as image data included in the reproduction target content, the content management section 112 reads out also the media data from the storage section 130 and returns the media data to the content reproduction section 113 as content data. The content reproduction section 113 generates a display image in accordance with the layout defining information returned from the content management section 112. If generation of the display image is completed, the content reproduction section 113 passes the generated display image to the display control section 115 and informs the event processing section 111 of a content reproduction result indicative of start of reproduction of the reproduction target content. Further, in case where generation of the display image results in failure, the event processing section 111 is informed of a content reproduction result indicative of failure in reproduction of the reproduction target content.

The content pre-processing section 114 is a block for converting the content, acquired by the content management section 112, into a data format which can be immediately reproduced by the content reproduction section 113. Specifically, lexical analysis and syntax analysis of XML data included in the content are carried out. Further, in case where the content includes compressed or encoded media data (e.g., JPEG data), a process for uncompressing or decoding the media is carried out. In the storage section 130, a content having been subjected to the data conversion process by the content pre-processing section 114 is stored. The content reproduction section 113 reads out and reproduces the content having been subjected to the data conversion process, thereby reducing a time taken to actually reproduce the content after receiving the reproduction instruction.

The display control section 115 is a block for causing the display section 140 to display the display image generated by the content reproduction section 113. The display control section 115 controls the display section 140 so as to display the display image supplied from the content reproduction section 140. The display section 140 displays the display image, generated by the content reproduction section 113, as controlled by the display control section 115.

The time management section 116 is a block for carrying out a time management process. When receiving from the content reproduction section 113 a content reproduction result indicating that reproduction of the reproduction target content has been started, the event processing section 111 instructs the time management section 116 to start up the timer. The time management section 116 monitors the time passage from the time when the instruction to start up the timer was given, and returns a timer notification to the event processing section 111 at the time when the time passage becomes a predetermined slide image switching time. When receiving the timer notification, the event processing section 111 instructs the content reproduction section 113 to reproduce a corresponding slide image content in order to display a slide image subsequent to the currently displayed image. Further, the time management section 116 provides time information indicative of a current time to the content management section 112. The content management section 112 utilizes the time information in updating the time information of the content management table.

The user operation analysis section 117 is a block for notifying the operation carried out by the user to the event processing section 111. When finding via the IR receiving section 150 that the user has carried out any operation, the user operation analysis section 117 passes to the event processing section 111 an operation information notification indicative of the operation.

The event processing section 111 controls the aforementioned sections in accordance with the content acquisition instruction information, the state transition specifying information, and the user operation defining information that are included in the reproduction target content. The characteristic process of the present invention is carried out in accordance with an instruction given by the event processing section 111, so that the process is described with reference to a flowchart as well as the process carried out by the content management section 122.

### (Process executed by the content reproduction apparatus)

The following description explains the process executed by the content reproducing apparatus 100 arranged in the foregoing manner with reference to Figs. 8 to 12.

Each of Figs. 8 and 9 is a flowchart illustrating a flow in which the content reproducing apparatus executes, for each reproduction target content, the content process. Note that, Fig. 8 illustrates a first half of the content process, and Fig. 9 illustrates a last half of the content process which last half is carried out subsequent to the process illustrated in Fig. 8.

With reference to Fig. 8, steps S1 to S14 are described as follows.

Step S1: In starting the content process with respect to the reproduction target content, the event processing section 111 instructs the content management section 112 to judge whether or not there is a reproduction target content. In response to the instruction, the content management section 112 judges whether the reproduction target content is stored in the storage section 130 or not. As the judgment, whether or not there is a reproduction target content in the storage section 130 may be judged by the content management section 112 in accordance with a content management table (described later), or whether or not there is a reproduction target content may be more directly judged by causing the content management section 112 to retrieve the reproduction target content in the storage section 130. When the judgment on whether or not there is a reproduction target content is completed, the content management section 112 returns the judgment result to the event processing section 111.

Step 2: When it is judged that the storage section 130 has no reproduction target content in the step S1, the event processing section 111 instructs the content reproduction section 113 to display a predetermined message informing the user that a process for acquiring the reproduction target content is to be carried out. In response to the instruction, the content reproduction section 113 reads out predetermined display data for displaying the message from a common utilization file stored in the storage section 130, and generates a display image indicative of the massage on the currently displayed image. The display control section 115 obtains the display image generated by the content reproduction section 113 and causes the display section 140 to display the image. Note that, as the predetermined message displayed in the display section 140, a predetermined character string such as "Content is being acquired ··· " may be displayed, or a predetermined graphic symbol such as a crock-like icon may be displayed. Further, it may be arranged so that: the aforementioned process is realized not by using the content reproduction section 113 but by causing the event processing section 111 to pass the display data directly to the display control section 115.

Step 3: After informing the user that the process for acquiring the reproduction target content is to be executed in the step S2, the event processing section 111 instructs the content management section 112 to actually acquire the reproduction target content. The content management section 112 acquires the reproduction target content in accordance with the content acquisition instruction.

Step 4: When the process for acquiring the reproduction target content is completed in the step S3, the event processing section 111 instructs the content reproduction section 113 not to display the predetermined message displayed in the step S2. In accordance with the instruction, the content reproduction section 113 passes the previous display image, which does not include the predetermined message, to the display control section 115 again. The display control section 115 causes the display section 140 to display the display image newly passed by the content reproduction section 113, thereby making the predetermined message not displayed.

Step 5: When it is judged that the reproduction target content is in the storage section 130 in the step S 1, the event processing section 111 gives the content management section 112 a time information update instruction for updating time information of the reproduction target content. In response to the time information update instruction, the content management section 112 updates the time information of the reproduction target content in the content management table. Note that, the time information in the content management table will be described later with reference to another drawing.

Step S6: The event processing section 111 requests the content management section 112 for the reproduction target content. In response to the request, the content management section 112 reads out the reproduction target content from the storage section 130 and returns the reproduction target content to the event processing section 111. Note that, the content management section 112 may return, to the event processing section 111, only the content acquisition instruction information, the state transition defining information, and the user operation defining information, which are included in the reproduction target content and are required by the event processing section 111.

Step S7: The event processing section 111 which has acquired the reproduction target content from the data management section 112 in the step S6 judges whether or not the reproduction target content includes the content acquisition instruction information indicative of an instruction to acquire a specific content. When it is judged that the reproduction target content does not include the content acquisition instruction information in the step S7, the step proceeds to the step S15 so as to start the process for reproducing the reproduction target content.

Step S8: When it is judged that the reproduction target content includes the content acquisition instruction information in the step S7, the event processing section 111 judges whether or not the content acquisition instruction information includes acquisition timing specifying information indicative of an instruction to execute the process for acquiring the acquisition target content in parallel to the process for reproducing the reproduction target content. With reference to Fig. 5, specifically, it is judged whether "sync" is specified as the mode attribute of the content acquisition instruction information or not.

Step S9: In case where the content acquisition instruction information included in the reproduction target content indicates that the process for acquiring the acquisition target content is to be executed in parallel to the subsequent process, i.e., the process for reproducing the reproduction target content (Yes in S8), more specifically, in case where "async" is specified as the mode attribute of the content acquisition instruction information, the event processing section 111 instructs the content management section 112 to start the acquisition of the acquisition target content specified by the content acquisition instruction information and the step immediately proceeds to the step S13 without waiting for completion of the acquisition of the acquisition target content. The content management section 112 acquires the acquisition target content in the background in parallel to processes following to the step S13.

Steps S10 to S12: In case where the content acquisition instruction information included in the reproduction target content does not indicate that the process for acquiring the acquisition target content is to be executed in parallel to the process for reproducing the reproduction target content (Yes in S8), more specifically, in case where "sync" is specified as the mode attribute of the content acquisition instruction information, a predetermined message indicating that the content acquisition process is being carried out is displayed (step S10), and the content acquisition process for acquiring the acquisition target content is executed (step S11), and the predetermined message is made not displayed when the content acquisition process S11 is completed (step S12). The processes executed in the steps S10 and S12 are similar to the processes executed in the steps S2 and S4, so that descriptions thereof are omitted. Further, the content acquisition process S11 will be described later with reference to Fig. 10.

Steps S13 to S14: When the process for acquiring the acquisition target content is completed in the steps S10 to S12, the content management section 112 executes a process for preparing the reproduction target content in a reproducible manner. Specifically, the content management section 112 judges whether or not content data required in reproducing the reproduction target content is entirely included in the reproduction target content (step S13). Here, an example of the content data required in reproducing the reproduction target content is layout defining information included in the XML data included in the reproduction target content. Further, in case where the layout defining information is based on other media data such as image data, also the media data is required in reproducing the reproduction target content. Examples of the necessary content data include: a set value such as slide image switching time information and focus position information; and display data such as icon data used to display an error image and a dialogue image which are to be displayed during reproduction of the reproduction target content. If it is judged in the step S 13 that content data is missing (No in the step S13), the content management section 112 retrieves the missing content data not only from other content data but also from data stored in the storage section 130, e.g., from a set file, a common utilization file, and the like, so as to read out the content data if the content data is found (step S14).

Next, with reference to Fig. 9, the steps S 15 to S24 are described as follows.

Step S15: The event processing section 111 gives the content reproduction section 113 a content reproduction instruction to reproduce the reproduction target content stored in the storage section 130. In response to the content reproduction instruction, the content reproduction section 113 requests the content management section 112 for content data required in reproducing the reproduction target content. In response to the request, the content management section 112 returns the exemplified content data required in reproducing the reproduction target content to the content reproduction section 113. The content reproduction section 113 generates a display image in accordance with the content data returned from the content management section 112. The display image generated by the content reproduction section 113 is passed to the display control section 115 and then is displayed in the display section 140. As a result, reproduction of the reproduction target content is started.

Steps S16 and S 17: After giving the content reproduction instruction, in parallel to the reproduction process in which the content reproduction section 113 reproduces the reproduction target content, the event processing section 111 waits for an execution request for execution of the content process in which a next content is processed as the reproduction target content (step S16) or an end request for ending of the entire content process (step S17). Examples of the execution request include: a timer notification given from the time management section 116; and a predetermined operation information notification given from a user operation analysis section 117. The former is to notify that a time passage from a time when reproduction of the current reproduction target content was started becomes a predetermined slide image switching time. The latter is to notify that the user inputs a next image display instruction to display a next image or a previous image display instruction to display a previous image. Further, an example of the end request is an operation information notification which is to notify that the user inputs a content process ending instruction to end the entire content process.

Steps S18 to S20: The event processing section 111 waits for the execution request and the end request and determines whether or not to preferentially execute the reproduction process of the reproduction target content, which has been started in the step S15, over the content acquisition process (step S18). In case where the content acquisition process is preferentially executed (No in the step S18), the event processing section 111 inquires the content management section 112 about whether the content acquisition process is temporarily stopped or not (step S25). If the content acquisition process is temporarily stopped, an acquisition process restart instruction is given to the content management section 112 so that the content management section 112 restart the temporarily stopped content acquisition process. In response to the acquisition process restart instruction, the content management section 112 restarts the temporarily stopped content acquisition process (step S26). While, in case of preferentially executing the process for reproducing the reproduction target content (Yes in the step S18), the event processing section 111 inquires the content management section 112 about whether the content acquisition process is being executed or not in the background (step S19). If the content acquisition process is being executed (Yes in the step S19), an acquisition process stoppage instruction is given to the content management section 112 so as to stop the content acquisition process which is being executed. In response to the acquisition process stoppage instruction, the content management section 112 stops the content acquisition process which is being executed (step S20).

Note that, whether the content reproduction process or the content acquisition process is to be preferentially executed is judged in the step S18, and this judgment is carried out, for example, in accordance with whether the content reproduction section 113 is reproducing animation or not. If the content reproduction section 113 is reproducing animation, the content reproduction process is preferentially executed, thereby allowing smooth display of animation. In order to realize such a process, the event processing section 111 is arranged so as to judge whether the content reproduction section 113 is reproducing animation or not in accordance with an animation reproduction restart signal and an animation reproduction ending signal which are supplied from the content reproduction section 113. Alternatively, the event processing section 111 may be arranged so as to judge whether the content reproduction section 113 is reproducing animation or not in accordance with animation reproduction instruction information (animation tag), indicative of an instruction to reproduce the animation, which is included in the reproduction target content. Note that, also in case where the content reproduction section 113 reproduces media data such as sound data which requires reproduction carried out in a time base manner, it is preferable to preferentially execute the content reproduction process as in the case of animation.

Steps S21 and S22: When the event processing section 111 receives the execution request for execution of the content process in which a next content is processed as the reproduction target content, the event processing section 111 stops the process for acquiring the acquisition target content which process is being executed in the background. Specifically, the content management section 112 is inquired about whether the content acquisition process is being executed or not in the background (step S21). If the content acquisition process is being executed (Yes in the step S21), an acquisition process stoppage instruction is given to the content management section 112 so as to stop the content acquisition process. In response to the acquisition process stoppage instruction, the content management section 112 stops the process for acquiring the acquisition target content (step S22). Thereafter, the aforementioned content process is repeated from the step S1 by targeting a next content as the reproduction target content.

Steps S23 and S24: When the event processing section 111 receives an end request to end the entire content process, the event processing section 111 gives an acquisition process stoppage instruction to the content management section 112 so as to stop the process for acquiring the acquisition target content. In response to the acquisition process stoppage instruction, the content management section 112 stops the process for acquiring the acquisition target content (step S23). After stopping the content acquisition process, the content management section 112 deletes, out of contents stored in the storage section 130, a content stored in the "temporary" mode. As a result, it is possible to delete the content including privacy information without fail. Further, a free area is newly generated in the storage section 130, so that it is possible to secure a storage area for storing a content in a next content reproduction process.

Fig. 10 is a flowchart illustrating a flow of a content acquisition process executed in the aforementioned step S11 and a flow of a content acquisition process started in the step S9 and executed in the background in parallel to the content reproduction process. With reference to Fig. 10, the flow of the content acquisition process is described as follows.

The content acquisition process illustrated in Fig. 10 is executed in accordance with content acquisition instruction information included in the acquisition target content. In case where the content acquisition instruction information specifies a plurality of contents as acquisition target contents, the following process is repeated with respect to each of the acquisition target contents.

Step S110: The event processing section 112 inquires the content management section 112 about whether or not the acquisition target contents have been stored in the storage section 130. In response to the inquiry, the content management section 112 judges whether or not the acquisition target contents have been stored in the storage section 130. As the judgment, whether or not there are acquisition target contents in the storage section 130 may be determined in accordance with the content management table (described later), or whether or not there are acquisition target contents may be determined by causing the content management section 112 to directly search the acquisition target contents in the storage section 130.

Step S120: If the acquisition target contents have been stored in the storage section 130 (Yes in the step S110), the content management section 112 updates time information of the content management table and then returns the judgment result to the event processing section 111. In this case, the process for acquiring the acquisition target contents is not executed. Note that, in order to correspond to the "reget" attribute of the content acquisition instruction information, before the step, there is added a step of causing the event processing section 111 to judge whether or not there is the "reget" attribute in the content acquisition instruction information. In case where there is the "reget" attribute, the following content acquisition process S130 is forcibly executed. In case where there is no "reget" attribute, the step S120 is carried out.

Step S 130: In case where the acquisition target contents have not been stored in the storage section 130 (No in the step S110), the content management section 112 instructs the content management section 112 to acquire the acquisition target contents. In response to the acquisition instruction, the content management section 112 executes the process for acquiring the acquisition target contents. The acquisition process will be further detailed in accordance with Fig. 11.

Fig. 11 is a flowchart detailing a flow of the process for acquiring the acquisition target contents. The respective processes illustrated in Fig. 11 are described as follows.

Step S131: As illustrated in Fig. 9, the content acquisition process has been suspended in the step S22 or the step S20. Thus, the content management section 112 first judges whether or not the process for acquiring the acquisition target contents was suspended.

Step S132: In case where the process for acquiring the acquisition target contents was suspended (Yes in the step S131), the content management section 112 restarts, from a position in which the previous acquisition process stopped, acquisition of other acquisition target contents. Thus, the content management section 112 stores, into the storage section 130, acquisition stoppage position information indicative of the number of bytes of the acquisition target contents which have been acquired at the time when the process for acquiring the acquisition target contents was suspended. In restarting the acquisition, the acquisition stoppage position information is referred to, and a content acquisition request for acquisition of a part subsequent to the position in which acquisition of the acquisition target contents was suspended is sent to the content providing server 200.

Step S133: In case where acquisition of the acquisition target contents have not been suspended (No in the step S131), the content management section 122 newly starts a process for acquiring the acquisition target contents. Specifically, an ordinary content acquisition request is sent to the content providing server 200 so as to newly obtain all the acquisition target contents via the communication section 120.

Steps S134 to S136: After sending the content acquisition request to the content providing server 200 in the step S131 or the step S132, the content management section 112 waits for completion of the acquisition of the acquisition target contents (Step S134). Further, during a period until the acquisition of the acquisition target contents is completed in the step S134 (Yes in the step S134), whether the acquisition process stoppage instruction is sent from the event processing section 111 or not is monitored (step S135). In response to the acquisition process stoppage instruction given by the event processing section 111 (Yes in the step S135), the content management section 112 ends the content acquisition process (S136).

Step S137: When the acquisition of the acquisition target contents is completed (Yes in the step S134), the content management section 112 passes the acquisition target contents, which have been acquired, to the content pre-processing section 114. As a pre-processing of the acquisition target contents which are to be reproduced later, the content pre-processing section 114 converts each of the acquisition target contents into a data format which can be immediately reproduced by the content reproduction section 113. Specifically, in case where the acquisition target content includes compressed or encoded data, the data is decompressed or decoded, and lexical analysis and syntax analysis of XML data included in the acquisition target content are carried out.

Steps S138 and S139: The acquisition target content which has been subjected to the pre-processing carried out by the content pre-processing section is stored into the storage section 130 by the content management section 112 (S138). The process for storing the content is described with reference to Fig. 12. When storage of the acquisition target content into the storage section 130 is completed, the content management section 112 updates time information of the acquisition target content which information is included in the content management table (S139) and ends the content acquisition process.

Fig. 12 is a flowchart indicative of a detail flow of the content storage process illustrated as the step S138 in Fig. 11.

First, the content management section 112 searches, out of contents stored in the storage section 130, a content stored in the temporary mode and then deletes the content (S201). Further, at the same time, the content management section 112 may search a content stored in the counter mode and a content stored in the timer mode so as to delete, out of these contents, a content which corresponds to the deletion condition.

Thereafter, whether or not the storage section 130 has a sufficient free area for storing the acquisition target content therein is confirmed (S202). If there is the sufficient free area (Yes in the step S202), the acquisition target content is stored in the storage section 130.

While, in case where the free area is insufficient (No in the step S202), the content management section 112 deletes, out of contents stored in the storage section 130 in the normal mode, a content whose time information is oldest (S203). Thereafter, whether or not the storage section 130 has the sufficient free area which allows the content to be stored therein is confirmed again (S204). If the free area is insufficient (No in the step S204), a content whose time information is the next oldest is deleted (S203). This process is repeated, thereby securing the free area for storing the acquisition target content therein. If the free area is sufficient (Yes in the step S204), the content management section 112 stores the acquisition target content into the storage section 130 (S205).

Next, with reference to (a) to (d) of Fig. 13, the following description explains an example of an arrangement of the content management table the content management section 112 uses to manage contents. (a) to (d) of Fig. 13 illustrate conditions of the content management table 200 in a time series manner. Note that, the content management table 2000 is stored in the storage section 130, and the content management section 112 can refer to and update the content management table 2000 at any time.

As illustrated in (a) of Fig. 13, the content management table 2000 allows each content stored in the storage section 130 to correspond to attribute values of the content, that is, a content name 2001, a file size 2002, time information 2003, a storage mode 2004, instruction information 2005, and acquisition mode 2006.

The content name 2001 is a name given to a content stored in the storage section 130 so as to identify the content. The content management section 112 refers to a file attribute of content acquisition instruction information indicative of an instruction to acquire the content and sets the content name of the content in accordance with acquisition target content specifying information.

The file size 2002 is a numerical value indicative of a data size of the content. The content management section 112 sets the value of the file size 2002 of the content to be a data size of the content informed by the content providing server 200 in acquiring the content.

The time information 2003 is a reference time given to the content. The content management means 112 updates the value of the time information 2003 of the content in storing the content into the storage section 130 and in reading out the content from the storage section 130. As a result, the value of the time information 2003 of the content is set to be earlier one of (i) a storage time in which the content is stored into the storage section 130 and (ii) a read-out time in which the content is read out from the storage section 130.

The storage mode 2004 is information for specifying a deletion condition of the content. The content management section 112 refers to the save attribute of the content acquisition instruction information indicative of an instruction to acquire the content and sets the value of the storage mode 2004 of the content in accordance with deletion condition specifying information.

The specifying information 2005 is information concerning the acquisition target content which is to be acquired in response to an instruction indicated by the content acquisition instruction information included in the content. The content management section 111 sets the instruction information 2005 with respect to all the acquisition target contents, specified by the content acquisition instruction information, in accordance with the content acquisition instruction information of the content. Specifically, with respect to each acquisition target content, a content name 2005a indicative of a name of the acquisition target content and a storage mode 2005b indicative of the deletion condition of the acquisition target content are set. Note that, Fig. 13 illustrates only two information sets as the instruction information 2005. However, as the instruction information 2005, the number of information sets can be arbitrarily set with respect to each content so as to correspond to the number of acquisition target contents specified by the content acquisition instruction information.

The acquisition mode 2006 is information indicative of a mode in which the acquisition target content specified by the content acquisition instruction information included in the content is to be acquired. The content management section 112 refers to the mode attribute of the content acquisition instruction information included in the content and sets the value of the acquisition mode 2006 of the content in accordance with the acquisition timing specifying information. Note that, Fig. 13 illustrates an arrangement of the content management table 2000 based on such condition that acquisition timing specifying information sets are collectively specified with respect to all the acquisition target contents. In case where the acquisition timing specifying information can be set with respect to each acquisition target content, the arrangement of the content management table 2000 is changed so that the acquisition mode 2006 can be set with respect to each instruction information 2005.

Note that, in the aforementioned description, the content name 2001 and the storage mode 2004 are set in accordance with the content acquisition instruction information indicative of an instruction to acquire the content, but it may be so arranged that the content management section 112 sets the content name 2001 and the storage mode 2004 in accordance with a value set in the content management table.

Specifically, (a) of Fig. 13 illustrates a state of the content management table 2000 at the time when the start-up image content CP1 is being reproduced and particularly at the time when acquisition of the password input image content CP2 has been completed. At this time, the start-up image content CP1 (content name: start) and the password input image content CP2 (content name: password) are stored in the storage section 130. In a content acquisition process subsequently executed, the password input image content CP2 is a deletion target content which is to be deleted from the storage section 130. This is because the password input image content CP2 is stored in the temporary mode.
(b) of Fig. 13 illustrates a state of the content management table 2000 at the time when the title image content CQ0 is being reproduced and particularly at the time when acquisition of the slide image content CQ1 and acquisition of the thumbnail image content CQ11 have been completed. At this time, the slide image content CQ1 (content name: slide 1) and the thumbnail image content CQ11 (content name: thumbnail) are stored in the storage section 130 as well as the start-up image content CP1 and the title image content CQ0. In the subsequently executed content storage process, there is no deletion target content. Further, the thumbnail image content CQ1 is stored in the static mode, so that the thumbnail image content CQ1 is not regarded as the deletion target in the subsequently executed content storage process.
(c) of Fig. 13 illustrates a state of the content management table 2000 when the slide image content CQ1 is being reproduced and particularly at the time when acquisition of the slide image content CQ2 out of the acquisition target contents has been completed. At this time, the slide image content CQ2 (content name: slide 2) is stored in the storage section 130 as well as the start-up image content CP1, the title image content CQ0, the slide image content CQ1, and the thumbnail image content CQ11. In the subsequently executed content storage process, the start-up image content CP1 is to be deleted. At the time when the subsequently acquired slide image content CQ10 is to be stored into the storage section 130, the free area becomes insufficient. This is because: out of contents other than the thumbnail image content CQ11 stored in the static mode, the start-up image content CP1 whose time passage from the reference time set in the time information is longest (that is, the reference time set in the time information is oldest) is selected as the deletion target. Note that, the description herein is given on the assumption that a storage capacity of the storage section 130 is 2,000,000 bytes.
   In (c) of Fig. 13, it should be noted that the time information of the slide image content CQ1 is updated. This is because: at the time when the slide image content CQ1 is read out for reproduction thereof, the content management section 112 updates the time information of the slide image content 1 (see the step S5 of Fig. 8).
(d) of Fig. 13 illustrates a state of the content management table 2000 when the slide image content CQ1 is being reproduced and particularly at the time when acquisition of the slide image content CQ1 and acquisition of the slide image content CQ 10 have been completed. At this time, the slide image content CQ10 (content name: slide 10) is stored in the storage section 130 as well as the title image content CQ0, the slide image content CQ1, the thumbnail image content CQ11, and the slide image content CQ2.

In (d) of Fig. 13, it should be noted that the time information of the slide image content CQ1 is updated. This is because: an instruction to acquire the slide image content CQ1 is given in accordance with the content instruction information included in the slide image content CQ10, and reading-out of the slide image CQ1 is carried out at this time in order to confirm whether the slide image content CQ1 has been stored in the storage section 130 or not (see the step S120 of Fig. 10).

Lastly, the content reproducing apparatus 100 may be arranged so as to accumulate log information indicative of log of the reproduced content in the storage section 130 and send the accumulated log information to the content providing apparatus 200 at a predetermined timing.

Fig. 14 is a content transition diagram illustrating an example of transition of a reproduction target content. Fig. 15 is a diagram illustrating an example of a content reproduction log table 3000 held in the storage section 130 when the content is reproduced as illustrated in the transition example of Fig. 14.

As illustrated in Fig. 15, the content reproduction log table 3000 stores: a content name 3001 of a content which has not transited, a content name 3002 of a content to which the foregoing content is to transit, and a transition number 3003 indicative of the number of times the foregoing content transits so that the content names 3001 and 3002 correspond to each other as a pair. The content reproduction log table 3000 shows that, for example, a frequency at which the thumbnail image content CQ11 transits to the slide image content CQ5 is higher than a frequency at which the thumbnail image content CQ11 transits to the slide image content CQ1.

In order to make the content reproduction log table 3000, every time transition of the reproduction target content occurs, the event processing section 111 checks whether or not a pair of (i) a content name of the current reproduction target content (which has not transited) and (ii) a content name of the subsequent reproduction target content (to which the current reproduction target content is to transit) exists in the content reproduction log table 3000. If the pair of the content name of the current reproduction target content and the content name of the subsequent reproduction target content exists in the content reproduction log table 3000, the corresponding transition number is increased by 1. If there is no pair of the content names, the pair of the content name of the current reproduction target content and the content name of the subsequent reproduction target content is newly added to the content reproduction log table 3000, and 1 is set as the corresponding transition number.

The content reproduction log table 3000 is sent from the content management section 112 to the content providing server 200, for example, when the service is finished (the slide show reproduction of the currently viewed album is finished). In the content providing server 200, content reproduction log tables 3000 sent from a plurality of content reproducing apparatuses 100 are gathered. On the side of the content providing server 200, statistics of the transition frequency of contents can be taken in accordance with the reproduction log table 3000 thereby updating content acquisition information included in each content. For example, if the frequency at which the thumbnail image content CQ11 transits to the slide image content CQ5 is high, content acquisition instruction information for giving an instruction to acquire the slide image content CQ5 is included in the thumbnail image content CQ11, or the slide image contents CQ1 to CQ10 are acquired in an order starting from the slide image content CQ5 (for example, content acquisition instruction information for giving an instruction to acquire the slide image content CQ5 is included in the title image content CQ0).

### (Sound reproduction function)

As described above, the content reproducing apparatus 100 has a slide show reproducing function for displaying a plurality of photographs acquired from the content providing server 200 while switching the photographs, but also can reproduce sound data acquired from the content providing server 200.

Examples of a method for causing the content reproducing apparatus 100 to reproduce sound data include (1) a first method in which sound data included in a content for displaying a slide image is reproduced and (2) a second method in which sound data having been acquired apart from the content for displaying the slide image is reproduced.

The first sound data reproducing method is described as follows with reference to Fig. 16 and Fig. 17.

The first sound data reproducing method is realized by incorporating (i) sound data and (ii) sound data reproduction instruction information (command) indicative of an instruction to reproduce the sound data into a content 1000 illustrated in Fig. 4. The content reproducing apparatus 100 reproduces the sound data included in the acquired content in accordance with the sound data reproduction instruction information. According to the first sound data reproducing method, the content reproducing apparatus 100 can reproduce the sound data included in the content while displaying image data stored in the content.

Note that, a method in which the content reproducing apparatus 100 acquires the content including the sound data and a method in which the content reproducing apparatus 100 manages the content including the sound data are the same as described above, so that descriptions thereof are omitted herein.

The following description will further detail the sound data and the content including the sound data reproduction instruction information.

Fig. 16 is a diagram illustrating a data structure of a content 1000' including sound data and sound data reproduction instruction information. As in the content 1000 illustrated in Fig. 4, the content 1000' includes XML data 1100 and image data 1200, and further includes at least one sound data 1300. Further, a layout defining part 1110 described in the content 1000' on the basis of SVG or the like includes sound data reproduction instruction information 1113 indicative of an instruction to reproduce the sound data 1300. The content reproducing apparatus 100 reproduces the sound data 1300 in accordance with the sound data reproduction instruction information 113.

The sound data reproduction instruction information 1113 may be arranged so as to start reproduction of the sound data 1300 while the image data 1200 is being displayed and at the time when a predetermined user operation is inputted (in inputting an album ID, in carrying out a determination operation, in carrying out an invalid operation, and a similar timing). Alternatively, the sound data reproduction instruction information 1113 may be arranged so as to start reproduction of the sound data 1300 at the time when display of the image data 1200 is started.

Fig. 17 illustrates a specific example of the sound data reproduction instruction information 1113 included in the content 1000'.
(a) of Fig. 17 illustrates sound data reproduction instruction information indicative of an instruction to reproduce sound data whose file name is "piko.acc" for 0.3 seconds in response to an instruction given by pressing a determination key "k" and to reproduce sound data whose file name is "boo.aac" for 0.3 seconds in response to an instruction given by pressing a return key "x". As the sound data corresponding to the sound data reproduction instruction information 1113 illustrated in (a) of Fig. 17, the content 1000' includes the sound data "piko.aac" having therein an input operation sound (beep) "pip" and the sound data "boo.aac" having therein an input operation sound "boo". The content reproducing apparatus 100 reproduces the sound data "piko.aac", in response to the instruction given by pressing the determination key "k", so as to output the input operation sound "pip", and reproduces the sound data "boo.aac", in response to the instruction given by pressing the return key "x", so as to output the input operation sound "boo".
(b) of Fig. 17 illustrates the sound data reproduction instruction information 1113 indicative of an instruction to reproduce sound data whose file name is "audio.aac" for 5 seconds. As the sound data corresponding to the sound data reproduction instruction information illustrated in (b) of Fig. 17, the content 1000' includes the sound data "audio.aac", and the content reproducing apparatus 100 reproduces the sound data "audio.aac" for 5 second while displaying the image data 1200. The sound data "audio.aac" includes a sound which should be reproduced for each content. Examples of the sound included in the sound data "audio.aac" are: a sound in reading aloud a title of the displayed slide show or a comment on the displayed slide show; a sound in reading aloud an electronic book; and the like. Note that, it may be so arranged that: as in the operation input sound, also a reading sound while displaying the image data 1200 can be selected by the user.

Next, the second sound data reproducing method is described as follows with reference to Fig. 18 and Fig. 19.

The second sound data reproducing method is realized by sound data acquisition instruction information included in a first content, sound data reproduction start information included in a second content, and sound data reproduction stoppage instruction information included in a third content. The content reproducing apparatus 100 acquires sound data in accordance with the sound data acquisition instruction information while reproducing the first content, and starts reproduction of the sound data in accordance with the sound data reproduction start instruction information while reproducing the second content, and stops the reproduction of the sound data in accordance with the sound data reproduction stoppage instruction information while reproducing the third content.

Fig. 18 is an image transition diagram illustrating an example of how an image displayed by the content reproducing apparatus 100 transits due to reproduction of a content provided by the content providing server apparatus 200. The image transition diagram illustrated in Fig. 18 is basically the same as the image transition diagram illustrated in Fig. 3 but is different in that a title image Q0, slide images Q1 to Q10, and a thumbnail image Q11 transit to an album log image Q12. The album log image Q11 is an image for indicating a list of album IDs of albums which have been viewed, and the user can select a desired album ID from the displayed list of album IDs.

In the image transition diagram illustrated in Fig. 18, sound data acquisition instruction information 1910 is included in a content CP2 for displaying a password input image P2, and sound data reproduction start instruction information 1920 is included in a content CQ0 for displaying a title image Q0, and sound data reproduction stoppage instruction information 1930 is included in a content CQ12 for displaying an album log image Q12.
(a) of Fig. 19 is a diagram illustrating a specific example of the sound data acquisition instruction information described in a state transition defining part of the content CP2. The sound data acquisition instruction information 1910 includes an audio attribute 1911 and a mode attribute 1912. As to the audio attribute 1911, acquisition target sound data specifying information for specifying acquisition target sound data can be used as an attribute value as in the file attribute of the content acquisition instruction information illustrated in Fig. 5. While, as to a mode attribute 1912, its attribute value is execution mode specifying information indicative of whether or not to execute the acquisition process for acquiring the acquisition target sound data in parallel to a process which should be subsequently carried out as in the mode attribute of the content acquisition instruction information illustrated in Fig. 5.
   The content management section 112 (see Fig. 1) of the content reproducing apparatus 100 acquires sound data whose file name is "BGM.aac" from the content providing server 200 in accordance with the sound data acquisition instruction information 1910. Further, the content data management section 112 stores the acquired sound data "BGM.aac" into a sound data storage region provided in the storage section 130. It is assured that the sound data "BGM.aac" stored in the sound data storage region is not overwritten until another sound data is stored into the sound data storage region.
   Note that, as to the sound data acquisition instruction information 1910, "sync" is specified as its mode attribute. Thus, the content reproducing apparatus 100 starts display of the title image Q0 after completing acquisition of the sound data "BGM.aac" based on the sound data acquisition instruction information 1910. That is, the sound data "BGM.aac" is surely stored in the sound data storage region at the time when the display of the title image Q0 is started.
(b) of Fig. 19 illustrates sound data reproduction start instruction information 1920 which is described in the layout defining part of the content CQ0 and is indicative of an instruction to immediately start reproduction of the sound data "BGM.aac". The content reproduction section 113 (see Fig. 1) of the content reproducing apparatus 100 starts display of the title image Q0 and starts reproduction of the sound data "BGM.aac", stored in the sound data storage region of the storage section 130, in accordance with the sound data reproduction start instruction information 1920. Subsequently, the content reproduction section 113 repetitively reproduces the sound data "BGM.aac" (repetitive reproduction) until a content CQ12 including the sound data reproduction stoppage instruction information is reproduced.
(c) of Fig. 19 illustrates the sound data reproduction stoppage instruction information 1930 which is described in a layout defining part of the content CQ12 and is indicative of an instruction to immediately stop reproduction of the sound data. The content reproduction section 113 (see Fig. 1) of the content reproducing apparatus 100 starts display of the album log image Q12 and stops reproduction of the currently reproduced sound data "BGM.aac" in accordance with the sound data reproduction stoppage instruction information 1920.

In this manner, the content reproducing apparatus 100 can repetitively reproduce the sound data "BGM.aac" as a background music while displaying the title image Q0, the slide images Q1 to Q10, and the thumbnail image Q11.

Note that, in the example illustrated in Fig. 19, the sound data acquisition instruction information 1910 is included in the content CP2 for displaying the password input image P2, but a content including the sound data acquisition instruction information 1910 is not limited to this. That is, for example, the sound data acquisition instruction information 1910 may be included in the content CQ0 for displaying the title image Q0 as in the sound data reproduction start instruction information 1920. Also in this case, "sync" is specified as the mode attribute 1912 of the sound data acquisition instruction information 1910, so that it is possible to start reproduction of the sound data after completion of acquisition of the sound data.

Fig. 20 is a timing chart illustrating the foregoing point. (a) of Fig. 20 is a timing chart in case where the sound data acquisition instruction information 1910 is included in the content CP2 for displaying the password input image P2. (b) of Fig. 20 is a timing chart in case where the sound data acquisition instruction information 1920 is included in the content CQ0 for displaying the title image Q0. In any case, display of the title image Q0 and reproduction of the sound data are started after completion of acquisition of the sound data.

Note that, the method in which predetermined sound data is reproduced as a background music is described above, but it may be so arranged that the sound data reproduced as a background music is selected from a list or it may be so arranged that the user inputs an ID so as to select the sound data. This arrangement may be realized by extending a method in which the album ID is informed to the content providing server 200.

Note that, in the second sound data reproducing method, the sound data is managed with it stored in the sound data storage region, but also image data commonly used for a plurality of slide images may be managed with it stored in an image data storage region of the storage section 130 as in the sound data. Examples of the image data commonly used for a plurality of slide images include an icon commonly displayed in respective slides and an image of a picture frame and the like.

### (Additional descriptions)

The present invention is not limited to the description of the embodiments above, but may be altered by a skilled person within the scope of the claims. An embodiment based on a proper combination of technical means disclosed in different embodiments is encompassed in the technical scope of the present invention.

Lastly, each block included in the control section 110 of the content reproducing apparatus 100 may be constituted by hardware logic, or by software with the use of a CPU as follows.

That is, the content reproducing apparatus 100 has: (i) the CPU (central processing unit) for executing an instruction of a control program realizing various functions; (ii) a ROM (read only memory) storing the program; (iii) a RAM (random access memory) for expanding the program; (iv) a storage device (storage medium) such as a memory storing the program and various data; and (v) the like. The object of the present invention also can be achieved by (i) providing, for the content reproducing apparatus 100, a storage medium storing, in a computer readable manner, a program code (executable program; intermediate code; source program) of the control program for the content reproducing apparatus 100, and (ii) causing a computer (CPU or MPU) to read and execute the program code stored in the storage medium, the program code being the software realizing the aforementioned functions.

Examples of the storage medium are: (i) tapes such as a magnetic tape and a cassette tape; (ii) magnetic disks such as a floppy® disk and a hard disk; (iii) optical disks such as a CD-ROM, an MO, an MD, a DVD, and a CD-R; (iv) cards such as an IC card (inclusive of a memory card) and an optical card; and (v) semiconductor memories such as a mask ROM, an EPROM, an EEPROM, and a flash ROM.

The content reproducing apparatus 100 may be connectable to the communication network, and the program code may be supplied via the communication network. The communication network is not particularly limited. Specific examples thereof are: the Internet, Intranet, Extranet, LAN, ISDN, VAN, CATV communication network, virtual private network, telephone network, mobile communication network, satellite communication network, and the like. Further, the transmission medium constituting the communication network is not particularly limited. Specific examples thereof are: (i) a wired channel using an IEEE 1394, a USB, a power-line communication, a cable TV line, a telephone line, a ADSL line, or the like; or (ii) a wireless communication using IrDA, infrared rays used for a remote controller, Bluetooth®, IEEE 802.11, HDR, a mobile phone network, a satellite connection, a terrestrial digital network, or the like. Note that, the present invention can be realized by a form of a computer data signal embedded in a carrier wave realized by electronic transmission of the program code.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### Industrial Applicability

The present invention is applicable to a content reproducing apparatus for reproducing contents and is favorably applicable particularly to a content reproducing apparatus, such as a slide show display apparatus, for reproducing a plurality of contents which should be reproduced in a predetermined order.

## Claims

1. A content reproducing apparatus, comprising:
content reproduction means for reproducing a content; and
content acquisition means for acquiring a specific acquisition target content in accordance with acquisition instruction information which is indicative of an instruction to acquire the specific acquisition target content and is included in the content reproduced by the content reproduction means.

2. The content reproducing apparatus as set forth in claim 1, wherein:
the acquisition instruction information is indicative of an instruction to acquire two or more acquisition target contents in a specific order, and
the content acquisition means acquires said two or more acquisition target contents in the order specified by the acquisition instruction information.

3. The content reproducing apparatus as set forth in claim 1 or claim 2, wherein:
the acquisition instruction information includes execution mode specifying information indicative of an execution mode of an acquisition process for acquiring each acquisition target content, and
the content reproduction means executes a reproduction process for carrying out content reproduction in parallel to the acquisition process executed by the content acquisition means when a first mode is specified by the execution mode specifying information and executes the reproduction process after the content acquisition means finishes the acquisition process when a second mode is specified by the execution mode specifying information.

4. The content reproducing apparatus as set forth in claim 3, further comprising display control means for causing a display section to display a predetermined message when the reproduction process executed by the content reproduction means is delayed until the content acquisition means finishes the acquisition process.

5. The content reproducing apparatus as set forth in any one of claims 1 to 4, wherein:
the acquisition instruction information includes deletion condition specifying information indicative of a condition under which each acquisition target content is deleted, and
the content acquisition means stores the acquisition target content into a content storage section so that the acquisition target content corresponds to the deletion condition specifying information.

6. The content reproducing apparatus as set forth in any one of claims 1 to 5, further comprising data format conversion means for converting the acquisition target content acquired by the content acquisition means into a data format, which is reproducible by the content reproduction means, before storing the acquisition target con-tent into the content storage section.

7. The content reproducing apparatus as set forth in any one of claims 1 to 6, wherein:
the content acquisition means temporarily stops acquisition of the acquisition target content for a predetermined period while the content reproduction means is reproducing the content.

8. The content reproducing apparatus as set forth in any one of claims 1 to 7, wherein:
the content reproduction means reproduces a plurality of contents while sequentially switching the contents,
said content reproducing apparatus further comprising reproduction log information generation means for generating reproduction log information, indicative of the number of times a reproduction target content is switched from a first content to a second content, with respect to each pair of contents in the plurality of contents.

9. The content reproducing apparatus as set forth in any one of claims 1 to 8, wherein:
the content reproduction means reproduces plural sets of image data while switching the plural sets of image data in a predetermined order, and
the content acquisition means acquires (i) image data which should be reproduced subsequently to currently reproduced image data and (ii) image data which should be reproduced previous to the currently reproduced image data, in accordance with acquisition instruction information included in a content in which the currently reproduced image data is stored.

10. The content reproducing apparatus as set forth in claim 9, wherein:
the content reproduction means displays a reduced image group, including reduced images respectively corresponding to the plural sets of image data, as a list in response to request from a user, and
the content acquisition means acquires image data of the reduced image group and stores the acquired image data of the reduced image group into a content storage section so that the image data corresponds to deletion condition specifying information for forbidding deletion of the image data of the reduced image group while reproducing the plural sets of image data.

11. A content providing apparatus, providing a content to a content reproducing apparatus,
said content providing apparatus comprising content providing means for providing a content, including acquisition instruction information for instructing the content reproducing apparatus to acquire a specific acquisition target content, to the content reproducing apparatus.

12. A content reproducing method, causing a content reproducing apparatus to reproduce a content,
said method comprising the step of acquiring a specific acquisition target content in accordance with acquisition instruction information which is indicative of an instruction to acquire the specific acquisition target content and is included in the content.

13. A content reproducing system, comprising:
a content providing apparatus for providing a content; and
a content reproducing apparatus for reproducing the content provided by the content providing apparatus, wherein
the content reproducing apparatus includes:
content reproduction means for reproducing the content provided by the content providing apparatus; and
content acquisition means for acquiring a specific acquisition target content from the content providing apparatus in accordance with acquisition instruction information which is indicative of an instruction to acquire the specific acquisition target content and is included in the content reproduced by the content reproduction means.

14. A data structure of a content reproduced by a content reproducing apparatus,
said data structure comprising acquisition instruction information for instructing the content reproducing apparatus to acquire a specific acquisition target content.

15. A content reproducing program, causing a computer to operate as the content reproducing apparatus as set forth in any one of claims 1 to 10, wherein
the computer is caused to function as each of the means provided in the content reproducing apparatus.

16. A computer-readable storage medium, in which the content reproducing program as set forth in claim 15 is stored.
